Europäisches Patentamt

European Patent Office

Office européen des brevets

(19)

(11) EP 1 104 126 A1

(12) EUROPEAN PATENT APPLICATION

(43) Date of publication:
30.05.2001 Bulletin 2001/22

(51) Int Cl.⁷: H04B 7/26

(21) Application number: 00403103.5

(22) Date of filing: 08.11.2000

(84) Designated Contracting States:
AT BE CH CY DE DK ES FI FR GB GR IE IT LI LU
MC NL PT SE TR
Designated Extension States:
AL LT LV MK RO SI

(30) Priority: 24.11.1999 FR 9914805

(71) Applicant: Mitsubishi Electric Telecom Europe
92000 Nanterre (FR)

(72) Inventor: Belaiche, Vincent Antoine Victor
35500 Vitre (FR)

(74) Representative: Blot, Philippe Robert Emile et al
c/o Cabinet Lavoix,
2, place d'Estienne d'Orves
75441 Paris Cedex 09 (FR)

(54) "Method for multiplexing transmission channels in flexible positions, corresponding application and device"

(57) The invention relates to a method for multiplexing several transport channels in flexible positions, included in a composite channel. Each transport channel is processed by a specific processing procedure and has a variable bit rate represented by a transport format. Each processing procedure comprises a step of rate matching as a function of a rate matching pattern. The rate matching pattern is defined by a set of rate matching pattern parameters. For each transport channel there is provided a step of determining a desired size variation between the block of symbols to be rate matched and the block of symbols at the output of the processing procedure.

For each processing procedure, there is provided a determination of the set of rate matching pattern parameters. The latter are determined independently of the single transport format considered and make it possible to obtain at most said desired size variation for each transport format.

FIG.1

EP 1 104 126 A1

**Description**

The present invention relates to a method for multiplexing at least two transport channels in flexible positions, said transport channels being included within a composite channel, each of said transport channels emanating from and being processed by a specific processing procedure, each of said transport channels having a bit rate which can vary, a transport format representing, for one and the same transport channel, said bit rate, each of said processing procedures comprising a step of rate matching, said rate matching step varying the size of a block of symbols to be rate matched, to a size of the rate matched block of symbols according to a size variation determined as a function of a rate matching pattern, said rate matching pattern being defined by a rate matching pattern parameter set, said method comprising, for each transport channel, a step of determining a desired size variation between said block of symbols to be rate matched and the block of symbols produced at the output of the associated processing procedure.

The present invention finds its application most especially in the field of third generation telecommunication systems for mobile telephones.

The 3GPP committee (3rd Generation Partnership Project) is a standardization body, whose aim is the standardization of a third generation telecommunication system for mobile telephones. The technique adopted for these systems is the CDMA technique (Code Division Multiple Access). One of the fundamental aspects distinguishing the third generation system from the second generation system is, apart from the fact that they use the radio spectrum more efficiently, that they procure very great flexibility of services.

In the OSI model (Open System Interconnection) of the ISO (International Standardization Organization), an item of telecommunication equipment is modelled by a layered model constituting a stack of protocols where each layer is a protocol affording a service to the layer of higher level. The service afforded by the level 1 layer is referred to as "transport channels". A transport channel can therefore be included as a stream of symbols between the level 1 and level 2 layers of the same item of equipment. A transport channel (TrCH for short) allows the level 2 layer to transmit symbols with a certain quality of service. This quality of service is dependent on the channel coding and on the channel interleaving which are employed. A transport channel can also be included as a stream of symbols between two level 2 layers of two distinct items of equipment connected by a radio link. In the subsequent description, a transport channel is a set of blocks of symbols at a given instant, and at a given step of the associated processing, for example at the interface between the level 1 and level 2 layers, or after the step 122 of segmentation per multiplexing frame described hereinafter.

Several transport channels may be multiplexed together so as to form a composite channel which can be transmitted on one or more, physical channel(s). The symbols transmitted in a transport channel are delivered periodically by the level 2 layer to the level 1 layer in the form of a transport block set. The periodic interval for which this delivery is performed is referred to as the Transmission Time Interval or TTI interval. A transmission time interval has a constant duration specific to the corresponding transport channel. The transport block set constitutes the unit on which the channel encoding and the channel interleaving are performed. The number of symbols contained in a transport block set is defined by its transport format (or TF for short). Thus, the transport format can take several values in the case of a transport channel with variable bit rate. On reception, so as to be able to decode the various transport channels, it is necessary to know their respective transport formats. In order to determine this transport format in the downlink (from the network to a mobile item of equipment), several techniques are known. The foremost of these techniques consists in transmitting on a special physical channel, termed the control physical channel, a transport formats combination indicator. This indicator gives the transport format of each transport channel. This first technique is referred to hereinafter as explicit indication of transport format.

A second known technique consists in blind detection of the transport formats of the various transport channels. This second technique is referred to as blind detection of the transport format.

The blind detection of transport format of a transport channel is performed at the moment of the channel decoding. Indeed the channel decoding makes it possible to detect, assuming a certain transport format, whether the data received are probably corrupted or are probably valid. When a transport format is assumed which is not the one with which the data were transmitted, then probably corrupted data are also detected. Thus, the transport format with which the data were transmitted is determined "blind", since it is this which, assumed on reception, almost always gives the greatest probability of validity of the data. In order to reduce the complexity of the blind detection of the transport format, an additional technique, termed "fixed positions of transport channels" is employed. An alternative technique termed "flexible positions of transport channels" does not make it possible, in the state of the art, to carry out with acceptable complexity the blind detection of transport format when transport format detection is necessary (that is to say when at least one transport channel has a variable bit rate). On the other hand, the "flexible positions" make it possible to use the spreading codes more efficiently.

The techniques of fixed positions and of flexible positions are distinguished essentially in the structure of the multiplexing frame obtained at the conclusion of the step of multiplexing the various transport channels and in the processing prior to the multiplexing of each of the transport channels.

More precisely, according to the technique of fixed positions, the blocks emanating from each processing chain specific to each transport channel all have the same size. Thus, on completion of the multiplexing which is performed by straightforward concatenation, the blocks emanating from each transport channel always occupy the same position within the multiplexing frame, whence the name "fixed positions".

According to the technique of flexible positions, the blocks obtained at the output of the processing chains are of variable sizes. These sizes depend in particular on the transport format used by the transport channel for the block of symbols considered.

During the multiplexing step, the blocks are simply concatenated together, this leading to the formation of a multiplexing frame in which the blocks of each transport channel have different positions from one multiplexing frame to another, whence the name "flexible positions".

In order to set out in detail the advantages and the drawbacks of the transport channel fixed positions and flexible positions techniques, the transmitting chain for the downlink, such as that defined by the 3GPP committee, of a third generation telecommunication system will now be described in conjunction with the drawings in which:

- Figure 1 is a schematic view of the flowchart for processing the data in a sending chain in the downlink (from a base station to a mobile telephone);
- Figure 2A is a schematic view illustrating an example of rate matching by repetition;
- Figure 2B is a schematic view illustrating an example of rate matching by puncturing;
- Figure 3 is a schematic view illustrating a step of inserting symbols of zero-energy contribution in a string of symbols.

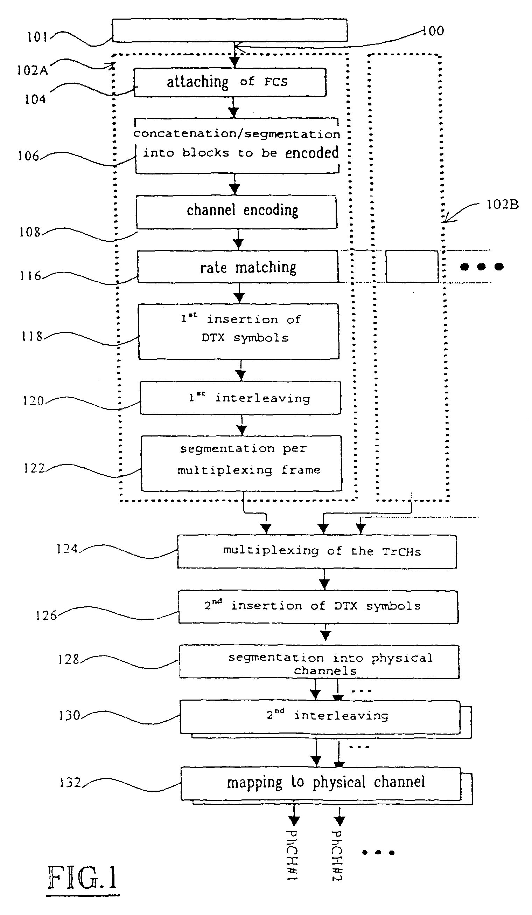

A transmitting chain for the downlink, that is to say from the network to a mobile item of equipment, is represented in Figure 1.

For each transport channel, referenced 100, the level 2 layer, referenced 101, supplies the level 1 layer with a set of symbol blocks, so-called "transport blocks", at each transmission time interval, denoted the TTI interval in the subsequent description.

The time interval corresponding to a TTI interval duration of 10 ms corresponds to a radio frame, that is to say a time interval numbered and synchronized according in particular to common physical channels broadcast by the network.

Moreover, it is recalled that the transport format is a cue representative of the number of transport blocks contained in the transport block set received by a transport channel and of their respective sizes. For a given transport channel, there exists a finite set of possible transport formats, one of which is selected at each TTI interval as a function of the requirements of the higher level layers. In the case of a transport channel with constant bit rate, this set includes a single element only.

Referring once again to Figure 1, each transport channel, referenced 100, receives at each associated TTI interval, a transport block set originating from a level 2 layer referenced 101. The transport channels having different qualities of service are processed by respective processing chains 102A, 102B.

As is known per se, a frame checking sequence FCS is attached to each of these blocks in the course of a step referenced 104. These sequences are used on reception to detect whether the transport block received is correct or corrupted. They may also be used in the course of the blind transport format detection as will be explained later. It should be noted that the FCS sequence may be of zero size when error detection is not necessary.

The next step, referenced 106, consists in forming, by concatenation/segmentation, a set of blocks to be encoded on the basis of the transport block set together with the transport block respective FCS sequences. Typically, this step 106 of concatenation/segmentation into blocks to be encoded consists in concatenating the transport blocks and their respective FCS sequences in series, so as to form a single block of symbols. This single block constitutes a block to be encoded when its size is below a certain limit dependent on the type of channel coding. Otherwise, this single block is segmented into a set of blocks to be encoded of similar sizes, so that the size of each of them does not exceed the limit size dependent on the channel encoder implemented in step 108.

The next step 108 consists in performing channel encoding on the blocks to be encoded. Thus, at the end of this step a block coded at each TTI interval is obtained. Typically, each block to be encoded of one and the same set is encoded separately, and the resulting blocks are concatenated together so as to form a single coded block. A coded block therefore corresponds to a transport block set. It should be noted that in the case where the transport block set is empty, by definition the coded block is of zero size.

In the downlink, illustrated in Figure 1, the transport channel after the channel encoding step 108 is first of all rate matched in step 116.

The rate matching is necessary since, in a system using the CDMA technique, the capacity is limited by interference. The transport channels within one and the same composite channel do not necessarily have the same requirement in terms of Eb/I ratio, where Eb designates the mean energy per coded bit, that is to say per bit after the channel encoding step 108 and I designates the mean energy of the interference. In order to balance the Eb/I ratio between the various transport channels, the coded symbols can be either repeated or punctured depending on whether one requires to increase the Eb/I ratio or decrease it. Without this rate matching operation, all the transport channels would enjoy the same Eb/I ratio on reception. This would be fixed by the most demanding transport channel, whilst the other transport channels would receive a signal of "too good" quality, which would needlessly increase the interference, and would impair the capacity of the system.

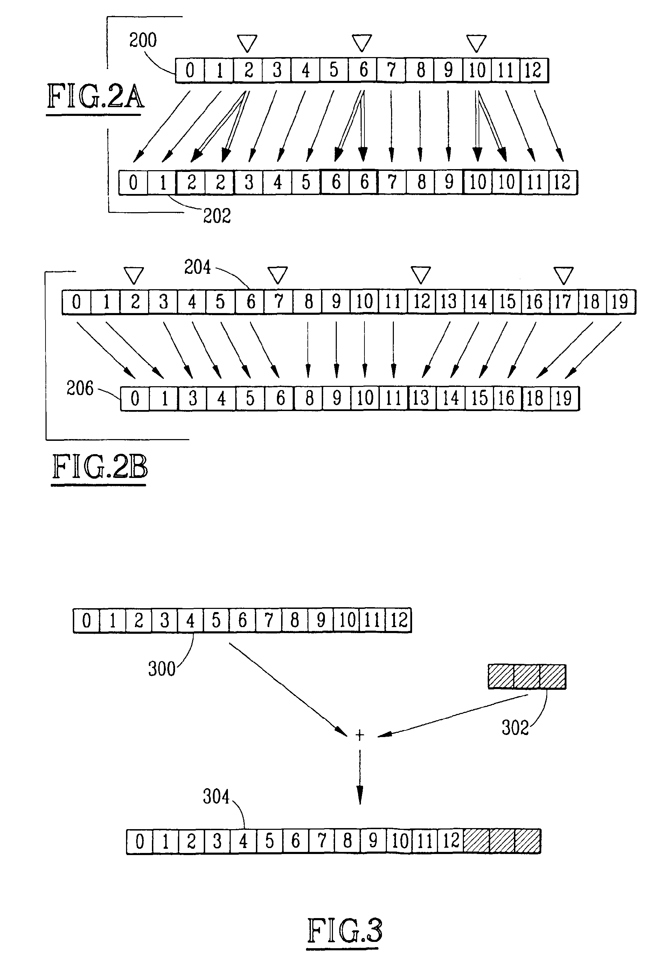

An example of rate matching is illustrated in Figure 2A. In this figure, the case of repetition is considered. A block referenced 200 of 13 symbols is rate matched so as to obtain by repetition a block referenced 202 of 16 symbols. In Figure 2B, the case of puncturing is considered. A block referenced 204 of 20 symbols is rate matched so as to obtain by puncturing a block referenced 206 of 16 symbols. The puncturing consists in deleting certain symbols.

The algorithm making it possible to determine the positions of repetition or of puncturing is given in Table 1 hereinbelow for the case of channel coding by convolutional code. The position of the repeated or punctured symbols, and, in the case of repetitions, the number of repetitions at each of these positions, define the rate matching pattern which is characteristic of the rate matching step.

Table 1

```
01:  depending on the case

02:  case of puncturing:

03:      e := e_ini      -- initialize the decision criterion

04:      m := 1          -- index of the current symbol

05:      while m ≤ N do    -- N is the size of the block
                                to be rate matched

06:          e := e - e_minus  -- update the error

07:          if e ≤ 0 then  -- test whether symbol number
                                m is to be punctured

08:              puncture symbol number m

09:              e := e + e_plus    -- update the decision
                                        criterion

10:          end if

11:          m := m + 1          -- next symbol

12:      end while
```

```
13:   case of repetition:

14:      e := e_ini       -- initialize the decision criterion

15:      m := 1           -- index of the current symbol

16:      while m ≤ N do     -- N is the size of the block
                                 to be rate matched

17:         e := e - e_minus  -- update      the      decision
                                 criterion

18:         while e ≤ 0 do --  test whether symbol number
                                 m is to be repeated

19:            repeat symbol number m

20:            e := e + e_plus      -- update   the   decision
                                        criterion

21:         end while

22:         m := m + 1              -- next symbol

23:      end while

24:   end depending on the case
```

A repeated symbol is placed immediately after the original symbol.

In the algorithm of Table 1 above, a decision criterion $e$ is initialized to a value $e_{ini}$. With each new symbol considered, the decision criterion $e$ is decremented by an amount $e_{minus}$. When, following the decrementation, the sign of the decision criterion $e$ becomes negative, then a puncturing, or a repetition, is performed, as well as an incrementation of the decision criterion $e$ by an amount $e_{plus}$, and this is repeated while the decision criterion $e$ is negative.

The puncturing/repetition pattern is dependent on the three parameters $e_{ini}$, $e_{plus}$ and $e_{minus}$. When the flexible positions of transport channels are used, these parameters are fixed as follows:

- $e_{ini} = 1$
- $e_{plus} = 2 \cdot N$
- $e_{minus} = 2 \cdot |\Delta N|$

Where $N$ is the number of symbols in the block before rate matching, $N+\Delta N$ is the number of symbols after rate matching, and $|x|$ is the absolute value of x.

Thus, for the example of Figure 2A, in the case of repetition:

- $e_{ini} = 1$
- $e_{plus} = 2 \cdot 13 = 26$
- $e_{minus} = 2 \cdot |3| = 6$

For Figure 2B, in the case of puncturing:

- $e_{ini} = 1$

- $e_{plus}$ = 2·20 = 40
- $e_{minus}$ = 2·|-4| = 8

Hereinafter, for any transport channel $i$, the TTI interval duration expressed as a number of radio frames is denoted $F_i$. We have $F_i \in \{1,2,4,8\}$.

For any transport channel $i$, and for any block of symbols of this channel, the block considered having size $N$ before rate matching, the block size variation $\Delta N$, during rate matching, is determined so that the size $N+\Delta N$ of the block after rate matching is always a multiple of $F_i$.

When the technique of fixed positions of transport channels is used, the rate matching step 116 is followed by a step 118 of inserting DTX symbols. DTX symbol designates a symbol taking a value distinct from the possible values for the data symbols, and which will be transmitted with zero energy at the moment of mapping to physical channel in step 132. The bit rate at the conclusion of this step 118, counting the data symbols and also the DTX symbols, is constant.

A simplified example is illustrated in Figure 3 where three DTX symbols referenced 302 are inserted at the end of a block of 13 symbols, referenced 300 and received by step 118, so as to produce a block of 16 symbols, referenced 304.

When the technique of flexible positions of transport channels is used, the step 118 of inserting DTX symbols is not implemented.

The symbols are thereafter interleaved in a step 120 of first interleaving. The first interleaving consists in writing the symbols into a matrix with $F_i$ columns, the writing being performed row-wise, in permuting the columns, and in reading the symbols column-wise. The size of the block before interleaving is always a multiple $H \cdot F_i$ of $F_i$, and the number of rows in the matrix is therefore $H$.

In the next step, referenced 122, a segmentation per multiplexing frame is performed. Indeed, all the steps upstream of this segmentation step 122 are performed TTI interval by TTI interval. Now, the various transport channels of the composite channel can have different TTI interval durations, and it is therefore necessary to normalize with respect to a common period, namely the radio frame, so as to perform a next multiplexing step referenced 124 which relates to the set of transport channels. Thus, for any transport channel $i$ and any block of symbols of a TTI interval of this channel before the segmentation step, the block of symbols is segmented into $F_i$ segments, each of which is associated with a radio frame of this TTI interval. In this way, all the steps downstream of the segmentation step 122 are performed radio frame by radio frame. The blocks of symbols before the segmentation step 122 always having a size $H \cdot F_i$ which is a multiple of $F_i$, the segmentation step 122 is performed very simply by placing the first $H$ symbols of the block in the first segment, associated with the first radio frame included in the TTI interval, the next $H$ symbols in the second segment associated with the second radio frame, etc.

When $F_i$ = 1, the segmentation step 122 has no effect and can also be deleted.

Referring once again to Figure 1, the various transport channels, after encoding, segmentation, interleaving and rate matching are intermultiplexed in step 124 so as to form a composite channel. This multiplexing step 124 periodically produces a symbol block referred to as a multiplexing frame. The period of production of the multiplexing frames corresponds to a radio frame. The series of multiplexing frames constitutes the composite channel.

The multiplexing carried out in step 124 is a straightforward concatenation of the blocks originating from each transport channel. The order of concatenation corresponds to the order of indexation of the transport channels 1, 2, ... $I$ within the composite channel.

When the technique of flexible positions is used, given that the bit rate of the multiplexed transport channels can be variable, the bit rate of the composite channel obtained at the end of this step 124 is also variable. Thus, when the technique of flexible positions of transport channels is used, the multiplexing step 124 is followed by a step 126 of inserting DTX symbols. A sufficient quantity of DTX symbols is appended to the end of the multiplexing frame so that the resulting block has a number of symbols equal to the number $N_{data}$ of symbols offered by the physical channel(s).

The capacity of a physical channel being limited, the number of physical channels necessary to convey this composite channel may possibly be greater than one. When the number of physical channels necessary is greater than one, a step 128 of segmenting this composite channel into physical channels is provided. This segmentation step 128 consists, for example in the case of two physical channels, in dispatching, the first half of the symbols to the first of the two physical channels and the second half of the symbols to the second physical channel.

The data segments obtained are thereafter interleaved in a step 130 and then transmitted over the physical channel corresponding to a step 132. This final step consists of a modulation of the symbols transmitted by spectral spreading.

In the downlink, the number of physical channels allotted to the composite channel, as well as their respective spreading factors are semi-static. They constitute the resource in terms of spreading codes used by the composite channel. The expression semi-static describes a quantity which the level 1 layer cannot change on its own initiative multiplexing frame by multiplexing frame, or TTI interval by TTI interval, especially as a function of the variations in bit rate (that is to say in transport format) of the transport channels. It is possible for a semi-static quantity to vary over an order of a higher level layer (typically the the radio resource control protocol in level 3), but this occurs less often than TTI interval by TTI interval for the largest of the TTI intervals of the composite channel.

Thus, the number $N_{data}$ of symbols available for a multiplexing frame owing to the limits of the physical channel (s) is itself semi-static in the downlink. Hereinafter, this number of symbols $N_{data}$ is referred to as the bit rate offered to the composite channel.

The respective advantages and drawbacks of the techniques of fixed positions and of flexible positions of transport channels will now be detailed.

The advantage obtained by the so-called fixed positions technique is that, for each transport format assumed during blind transport format detection, the block to be decoded by the channel decoding is always a prefix part of one and the same block independent of the assumed transport format. The channel decoding is the inverse operation of the channel encoding step referenced 108 in Figure 1.

The advantage of the block to be decoded being a prefix of a block independent of the transport format is that, when the channel encoding is carried out by convolutional code, then a considerable part of the work performed by the channel decoder, in the case of a first assumed transport format, is reusable in the case of a second assumed transport format corresponding to a higher bit rate. Thus, the total complexity of the decoding is not multiplied by the number of transport formats to be tried, but is substantially the same as that corresponding to the transport format corresponding to the highest bit rate.

Thus, the so-called fixed positions technique has the advantage that it allows blind detection of the transport format with acceptable complexity. This advantage resides in the fact that it is possible in the receiver to perform, without knowing the transport formats of the transport channels, the steps inverse to the steps 124 of multiplexing, 122 of segmentation per multiplexing frame, 120 of first interleaving and 116 of rate matching. Thus, these inverse steps are carried out once only per radio frame or per TTI interval depending on the case, and at their completion, a single block per TTI interval is produced. This single block contains the coded symbols received, as a prefix part, and also random symbols received in place of the DTX symbols inserted in step 118. The operation inverse to step 118 of first insertion of DTX symbols is then performed at the moment of blind transport format detection in the channel decoder.

On the other hand, this technique of fixed positions of transport channels has the drawback that the resource in terms of spreading codes which is seized by a fixed-position transport channel is always that corresponding to the maximum bit rate of this transport channel. Indeed, the DTX symbols added to the transport channel in step 118 are sufficiently numerous for the resulting bit rate to be constant. Thus, the transport channels included within one and the same composite channel sharing the same resource in terms of codes, it is not possible, when one of the transport channels has a smaller bit rate than its maximum bit rate, for the other transport channels to be able to reuse the resource in terms of spreading codes which is thus made free. Each transport channel therefore always seizes the same resource which corresponds to that seized in order to support its maximum bit rate.

This potentially larger consumption of the spreading codes resource by the transport channels, is in part compensated for by the fact that the blind transport format detection makes it possible not to transmit any explicit indication of combinations of transport formats, and hence thereby to make a saving with regard to spreading codes resource.

The limitation in terms of spreading code is due to the fact that, in the downlink, it is necessary, in order to isolate the various physical channels, to use orthogonal spreading codes. The spreading codes used are referred to as OVSF codes (standing for **O**rthogonal **V**ariable **S**preading **F**actor). These codes can be ranked in a tree. The closer a code is to the root of the tree, the smaller is its spreading factor, and the higher is the physical channel bit rate which it allows. Thus, given the reduced number of OVSF codes, it is advisable to try to use the codes with the largest spreading factor, that is to say those which are as far as possible away from the root. Indeed, the larger the spreading factor of a code, the larger the number of codes remaining free after the allotting of this code.

In the state of the art, it is not possible simultaneously to obtain the advantages on the one hand of the so-called fixed positions of transport channels technique, allowing blind detection of the transport format, and on the other hand of the so-called flexible positions of transport channels technique, allowing best possible use of the spreading codes resources allotted to the composite channel.

The objective of the present invention is to alleviate the aforesaid drawback by proposing a solution for obtaining these two advantages simultaneously, that is to say for implementing blind rate detection with flexible positions of transport channels, whilst preserving acceptable complexity in respect of the receiver.

The condition for stating that the complexity is acceptable is that the complexity of the channel decoding step associated with a transport channel must not be greater than that of the decoding step which would be performed if the transport channel always had the transport format corresponding to its highest bit rate, and that this is known to the receiver before the channel decoding step. This condition is fulfilled if it is possible, as in the known technique of blind transport format detection, to present the channel decoder with a block of symbols received, of which a prefix is the block of symbols of the transport channel whose unknown size is to be determined, this size being representative of the transport format.

In order to achieve the objective set forth, the subject of the invention is a method of the aforesaid type, characterized in that said method comprises, for each of said processing procedures, a step of determining said rate matching pattern parameter set, said rate matching pattern parameters being determined independently of the single transport format considered and making it possible to obtain at most said desired size variation for each of said transport formats.

In the entire description, the proposition according to which "the pattern is independent of the single transport format considered" signifies that the pattern does not depend solely on the transport format considered.

According to particular modes of implementation, the method comprises one or more of the following characteristics:

-- said determined rate matching pattern parameters make it possible to obtain a size variation, termed the size variation obtained, between said block of symbols to be rate matched and said rate matched block of symbols, and said method comprises, during each of said processing procedures, a step of inserting symbols of zero-energy contribution, said rate matching step preceding said step of inserting symbols of zero-energy contribution, so that the sum of said size variation obtained and of the number of symbols of zero-energy contribution inserted is at most equal to said desired size variation;

-- said rate matching pattern parameters are determined as a function of a set (s, $e_{ini}$, $e_{plus}$, $e_{minus}$) of four rate matching pattern parameters, termed the first parameter set, determining said rate matching pattern according to a first algorithm in which:

- the value of the first parameter s determines whether, during said rate matching step, at least some symbols of the block of symbols to be rate matched are to be punctured or to be repeated, or all the symbols of the block of symbols to be rate matched are to be preserved in their state;

and, if, during said rate matching step, at least some symbols of the block of symbols to be rate matched are to be punctured or to be repeated according to said value of the first parameter then:

- the value of the second parameter $e_{ini}$ is the initial value assigned to a decision criterion e relating to said rate matching step to be implemented;
- the value of the third parameter $e_{plus}$ is the value, for each punctured or repeated symbol, of an increment added to said decision criterion e relating to said rate matching step to be implemented; and
- the value of the fourth parameter $e_{minus}$ is the value, for each new symbol considered of the block of symbols to be rate matched, of a decrement deducted from said decision criterion e;

each of the symbols of the block of symbols to be rate matched being considered in accordance with its order of arrangement within said block, said rate matching step puncturing or repeating the symbol considered if the value of said decision criterion e is below a predetermined threshold;

-- said rate matching step, termed the global rate matching step, is performed according to a second algorithm and comprises:

- a step of segmenting said block of symbols to be rate matched, the number of segments of symbols to be rate matched produced being a maximum, the sizes of said segments of symbols to be rate matched produced being determined by a second set of parameters of the rate matching pattern, said second rate matching pattern parameter set comprising a list of parameters $\vec{\varepsilon}_k$, each of said parameters $\vec{\varepsilon}_k$ itself comprising a third set of five parameters ($N_k$, $s_k$, $e_{ini,k}$, $e_{plus,k}$, $e_{minus,k}$) associated with the segment of symbols to be rate matched k considered, the value of the first parameter $N_k$ of said third set representing the size of the segment of symbols to be rate matched k considered, with the exception of the last segment of symbols to be rate matched,
- a partial step of rate matching of each of said segments of symbols to be rate matched, said step being performed according to said first algorithm and as a function of said first parameter set with, for parameter values, those of the last four parameters ($s_k$, $e_{ini,k}$, $e_{plus,k}$, $e_{minus,k}$) of said third parameter set corresponding to the segment of symbols to be rate matched k considered,
- a step of concatenating the segments of rate matched symbols obtained after said partial steps of rate matching so as to form said rate matched block of symbols;

-- said global rate matching step comprises, for a transport channel i considered:

- a step of ranking, in ascending order, the non-zero sizes of blocks of symbols to be rate matched, for each of the transport formats, and

- a step of determining, for the same transport channel $i$, each of the parameters of said second parameter set according to the following formulae:

- $p = L$, $p$ being the number of parameters in said second parameter set, and $L$ being the number of non-zero sizes of blocks of symbols to be rate matched for all the transport formats; and

- for every $k$ lying between 1 and $p$:

  - $N_k = N_{i,k} - N_{i,k-l}$, $N_k$ being said first parameter of said third parameter set, and $N_{i,k}$ being the k-th non-zero size of block of symbols to be rate matched, $N_{i,k-1}$ being the (k-1)-th non-zero size of block of symbols to be rate matched for k > 1, and taking the value zero for k = 1;
  - $s_k = \mathrm{sgn}(\Delta N_{i,k}^{desired} - \Delta N_{i,k-1}^{desired})$,
  - $s_k$ being the second parameter of said third parameter set;
  - $\Delta N_{i,k}^{desired}$ being the desired size variation for the transport format corresponding to the k-th non-zero size of block of symbols to be rate matched considered;

  - $\Delta N_{i,k-1}^{desired}$ being the desired size variation for the transport format corresponding to the (k-1)-th non-zero size of block of symbols to be rate matched when k > 1, and taking the value zero when k = 1;

    - $x \longmapsto \mathrm{sgn}(x)$ being a function the image value of which determines for the first parameter of said first set, that at least one symbol is to be punctured when $x < 0$, that the symbols are to remain in their state when $x = 0$, and that at least one symbol is to be repeated when $x > 0$;

  - $e_{ini,k} = 1$; $e_{ini,k}$ being the second parameter of said third parameter set; and
  - when the value $s_k$ assigned to said second parameter of said third parameter set determines for the first parameter of said first parameter set that at least one symbol is to be punctured or repeated:
  - $e_{plus,k} = N_k$; $e_{plus,k}$ being the third parameter of said third parameter set, and $N_k$ being the value assigned to said first parameter of said third parameter set,
  - $e_{minus,k} = |\Delta N_{i,k}^{desired} - \Delta N_{i,k-1}^{desired}|$,

    - $e_{minus,k}$ being the fifth parameter of said third parameter set,
    - $\Delta N_{i,k}^{desired}$ and $\Delta N_{i,k-1}^{desired}$ designating the same values as for the assigning of said second parameter $s_k$ of said third parameter set, and
    - $x \longmapsto |x|$ being the absolute value function;

-- each of said transport channels is transmitted over at least one associated transmission time interval, said method for multiplexing transport channels comprising a step of multiplexing transport channels, and said step of multiplexing transport channels itself comprises the following successive steps of:

  a) distributing the transport channels into at least two parts of transport channels;
  b) multiplexing by concatenation, in each of the parts, the transport channels, so as to obtain, for each part, a partial multiplexing frame, the transport channels being concatenated, in at least one of said parts, according to the ascending order of the durations of their transmission time intervals; and
  c) concatenating said partial multiplexing frames.

-- said step of distributing the transport channels into at least two parts of transport channels comprises a phase of distributing the transport channels into at least one part of a first type and at least one part of a second type which are such that the distributed transport channels in a part of the second type have a transport format which can be deduced from the transport formats of distributed transport channels in at least one part of the first type, and the transport channels in the part or parts of the first type are concatenated according to the ascending order of the durations of their transmission time intervals;

-- said method comprises a step of inserting symbols of zero-energy contribution, said step of inserting symbols of zero-energy contribution following said step of multiplexing transport channels, termed the second insertion step, said step of inserting symbols of zero-energy contribution included within said processing procedure being termed the first insertion step, and said first insertion step makes it possible to insert symbols of zero-energy contribution, a first part of the difference between said desired size variation and said size variation obtained, and said second insertion step makes it possible to insert a second part of the difference between said desired size variation and said size variation obtained, said second part being complementary to said first part;

-- said step of determining said rate matching pattern parameter set comprises the following successive steps of:

a) determining a group of sets of parameters of rate matching patterns satisfying an initial condition according to which the size variation obtained in the course of said rate matching step is below said desired size variation;

b) determining, in said group of sets of parameters of rate matching patterns, a subgroup consisting of the rate matching pattern parameter sets ensuring the maximization of a first predetermined criterion; and

c) selecting, in said subgroup, a rate matching pattern parameter set according to a second predetermined criterion;

-- for each processing procedure, said size variation $\Delta N^{\text{obtained}}$ obtained in the course of said rate matching step for a block of symbols having a size $N$ before said rate matching step is given by the following formula:

$$\Delta N^{\text{obtained}} = s \cdot \left( 1 + \left\lfloor \frac{e_{minus} \cdot N - e_{ini}}{e_{plus}} \right\rfloor \right) \qquad (3)$$

where $\lfloor x \rfloor$ denotes the largest integer less than or equal to $x$; and

where s, $e_{ini}$, $e_{minus}$ and $e_{plus}$ are parameters of said first rate matching pattern parameter set;

-- for each processing procedure, the first parameter, s, of the rate matching pattern parameter set of said rate matching step of each processing procedure is given by the following formula:

$$s = \min_{l \in TFS} \left\{ \text{sgn} \left( \Delta N_l^{\text{desired}} \right) \right\}$$

where $TFS$ is the transport format set and $\Delta N_l^{\text{desired}}$ is the desired size variation for the transport format $l$ considered;

-- for each processing procedure, the third parameter, $e_{plus}$, of the rate matching pattern parameter set of said rate matching step of each processing procedure satisfies the following inequality:

$$e_{plus} \geq 1 + 2 \cdot \max_{l \in TFS} \{ N_l \}$$

where $TFS$ is the transport format set and $N_l$ is the size of the block of symbols before said rate matching step for the transport format $l$ considered;

-- each processing procedure comprises a step of interleaving at the conclusion of said step of inserting symbols of zero-energy contribution, which interleaving step comprises the following successive phases of:

a) writing the symbols row-wise into a matrix;

b) permuting the symbols within each row of the matrix with a row-specific permutation, and the permutation being independent of the total number of rows of the matrix; and

c) column-wise reading of the symbols of the matrix; and

-- it comprises a step of multiplexing transport channels, and said step of multiplexing transport channels comprises the following successive phases of:

a) distributing the transport channels into a first part of transport channels and into a second part of transport channels;

b) concatenating the transport channels of the first part so as to produce a first partial multiplexing frame;

c) processing the transport channels of the second part, so as to produce a second partial multiplexing frame, the processing phase comprising the following steps of:

c 1) concatenating the transport channels; and

c 2) inverting the order of the symbols in each of the concatenated transport channels or in each of the transport channels to be concatenated; and

d) concatenating the first and second partial multiplexing frames.

The subject of the invention is also the application to a composite channel conveying at least one telephony service of a multiplexing method as defined above, the telephony service having in particular a spreading factor the value of which is equal to 256.

The subject of the invention is moreover a device for multiplexing at least two transport channels in flexible positions, said transport channels being included within a composite channel, each of said transport channels emanating from and being processed by a specific processing module, each of said transport channels having a bit rate which can vary, a transport format representing, for one and the same transport channel, said bit rate, each of said processing modules comprising means of rate matching, said rate matching means varying the size of a block of symbols feeding said rate matching means, to a size of the symbol block generated by said rate matching means according to a size variation determined as a function of a rate matching pattern, said rate matching pattern being defined by a rate matching pattern parameter set, said device comprising, for each transport channel, means of determining a desired size variation between said block of symbols to be rate matched and the symbol block produced at the output of the associated processing module, characterized in that said device comprises, for each of said processing modules, means of determining said rate matching pattern parameter set, said rate matching pattern parameters being determined independently of the single transport format considered and making it possible to obtain at most said desired size variation, for each of said transport formats.

The invention will be better understood on reading the description which follows, given solely by way of example and whilst referring to the already-mentioned figures and to the succeeding figures in which:

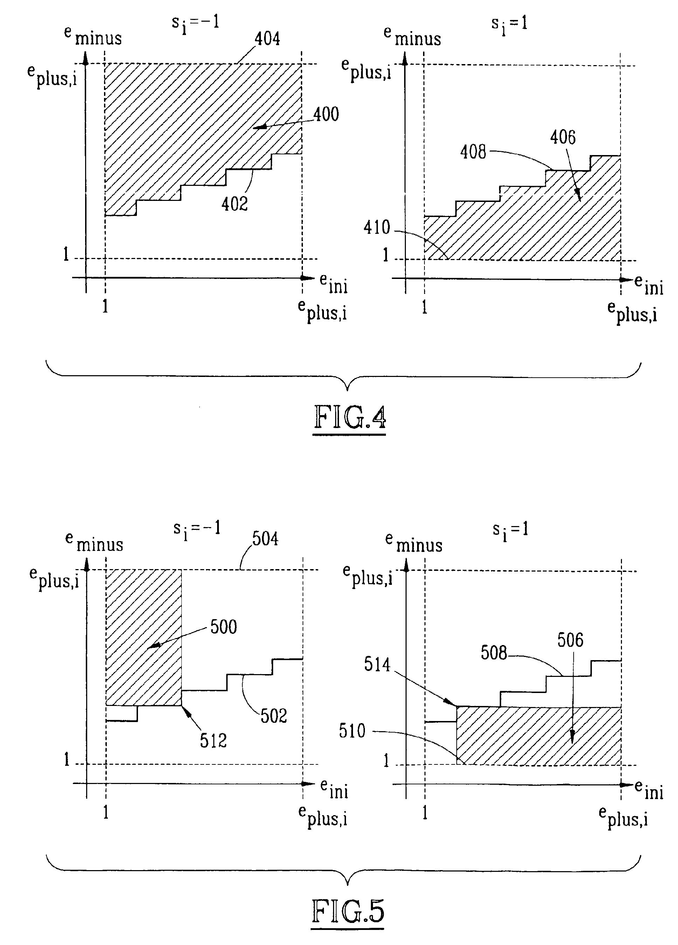

- Figure 4 is a graphical representation of a group $E$ of sets of rate matching parameters which is defined by a conjunction of constraints of the type $\Delta N_{i,l}^{\text{obtained}} \leq \Delta N_{i,l}^{\text{desired}}$ for a set of transport formats $l$;

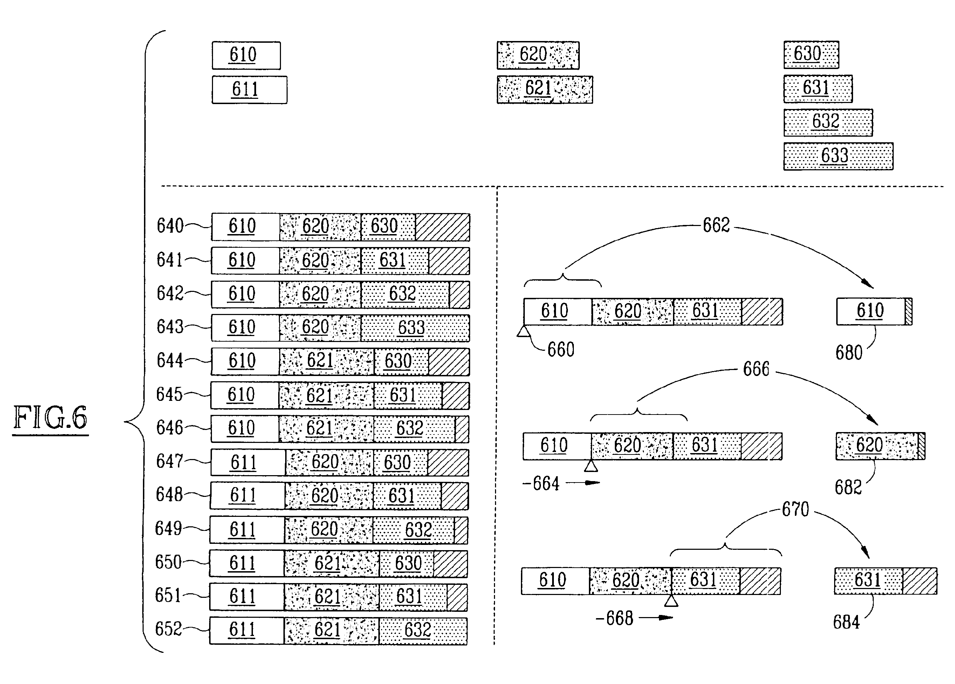

- Figure 5 is a graphical representation of a subgroup of the group represented in Figure 4, this subgroup perhaps stored with little information;
- Figure 6 is a schematic view illustrating the sequential detection operated on a composite channel handled by the technique of flexible positions according to the invention;

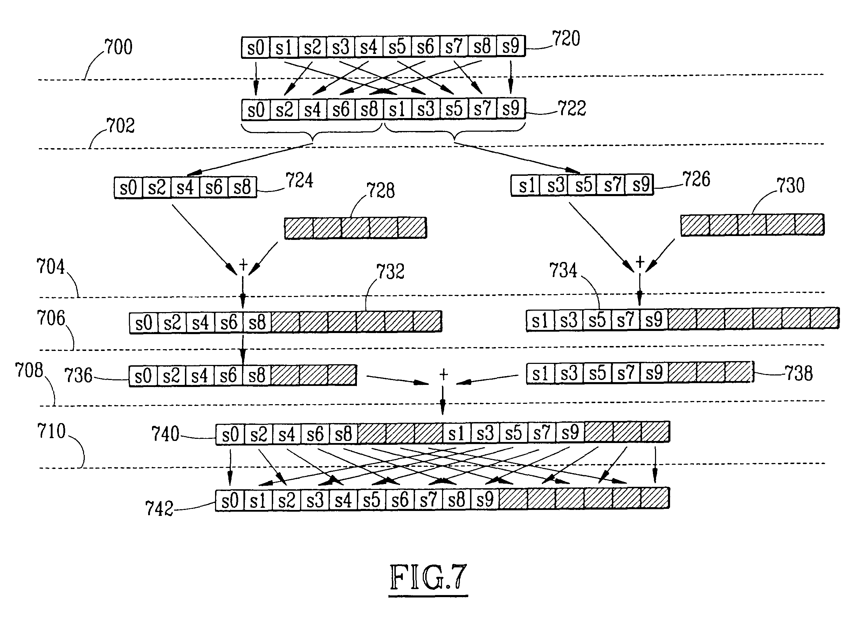

- Figure 7 is a schematic view illustrating the sequencing of the main steps during sending and receiving by implementation of the technique of flexible positions according to the invention in the case of transmission intervals of different lengths;

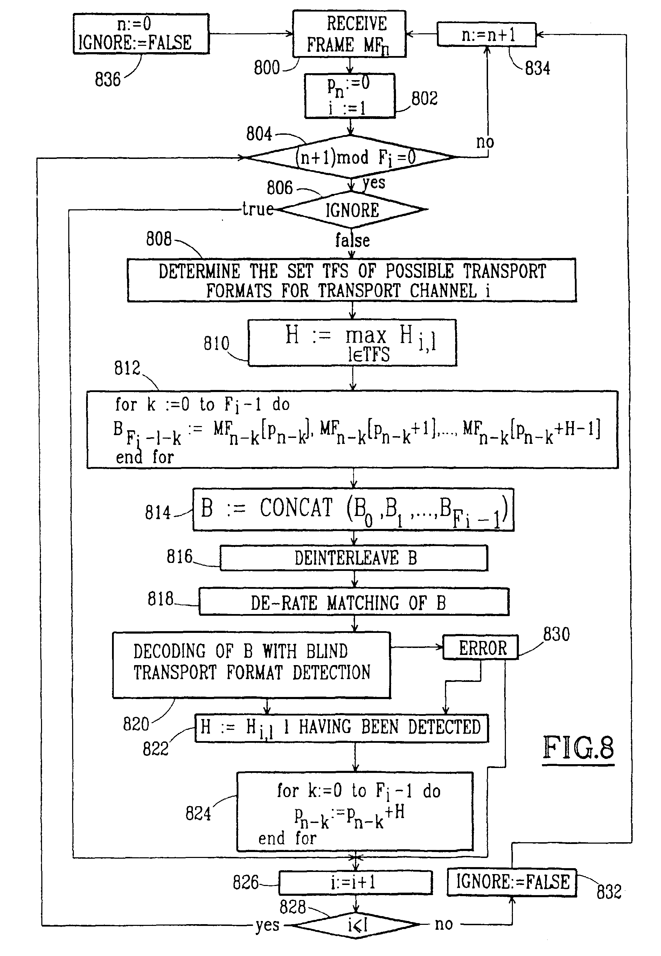

- Figure 8 is a flowchart of a blind rate detection sequencing algorithm according to the invention;

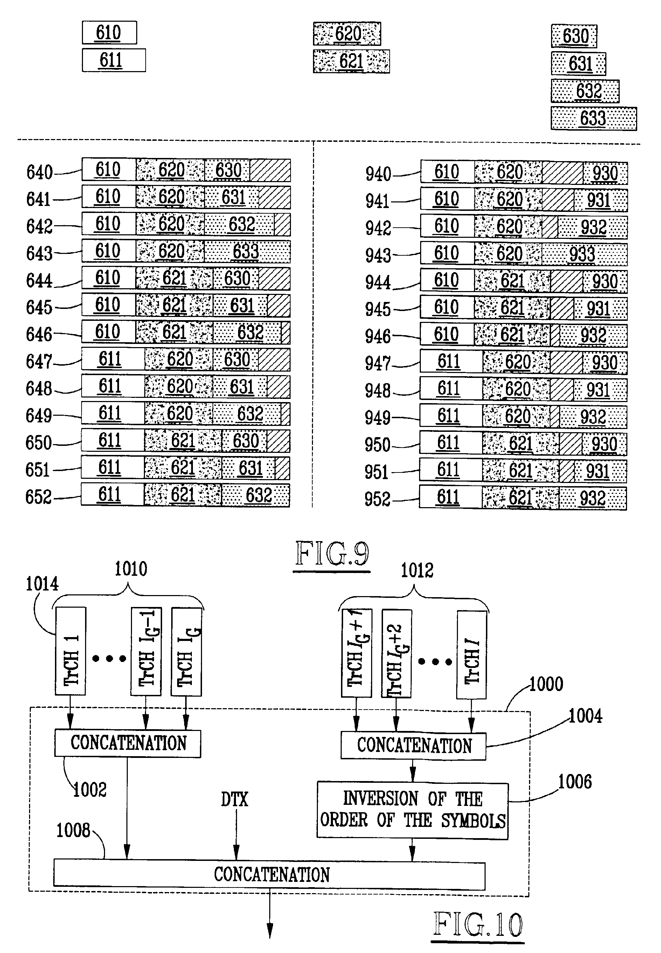

- Figure 9 is a schematic view comparing the multiplexing frames according to the invention which are obtained on the one hand, by multiplexing referred to as one-way multiplexing; and on the other hand, by multiplexing referred to as two-way multiplexing; and
- Figure 10 is a schematic view of a multiplexing and DTX symbols insertion chain adapted to form the multiplexing frames according to two-way multiplexing.

Hereinafter, the known technique will be designated by "conventional flexible positions" and the technique of the invention by "flexible positions of the invention".

Advantageously, according to a characteristic of the invention, the transport channels are ordered during multiplexing by concatenation within the composite channel in ascending order of the TTI interval durations of the transport channels.

In the invention, the sending chain is operated in a similar manner to the case of "conventional flexible positions" of transport channels, with the difference that the rate matching step 116 and the first insertion of DTX symbols step 118 are modified.

The modification is firstly that in the rate matching step 116 of the invention a semi-static rate matching pattern is applied, unlike in the state of the art where the pattern is dependent on the number of symbols before the state of the art step 116. Thus, the semi-static rate matching pattern applied in step 116 is independent of the transport format of the block to be rate matched considered.

Secondly, a restricted number of DTX symbols is inserted in step 118 of the invention so as to obtain the same number on completion of step 118 of the invention, as at the output of step 116 in the case of "conventional flexible positions". The expression restricted number should be understood to mean that their maximum number is substantially equal to $2 \cdot F_i + 1$. This differs from the technique of "conventional flexible positions" in which no DTX symbol is inserted in step 118 (or, in other words, step 118 is absent).

The potential insertion of a small number of DTX symbols is advantageous in the invention. Indeed, in the case of "conventional flexible positions", for each transport channel $i$ and for each transport format $l$ of transport channel

*i*, a parameter $\Delta N_{i,l}^{\text{desired}}$ is determined. This parameter fixes the desired size variation in the course of the rate matching, that is to say if $N_{i,l}$ denotes the size of the symbol blocks before rate matching for transport channel *i* and its transport format *l*, then $N_{i,l} + \Delta N_{i,l}^{\text{desired}}$ is the desired size of symbol block after rate matching.

The desired size variation $\Delta N_{i,l}^{\text{desired}}$ being determined, it is possible with a simple algorithm, such as that of Table 1, to determine a rate matching pattern from among those which the algorithm can produce, so that the size variation $\Delta N_{i,l}^{\text{obtained}}$ obtained in the course of rate matching is equal to the desired size variation $\Delta N_{i,l}^{\text{desired}}$ .

In the case of "flexible positions of the invention", this may not be possible. Indeed, as in the technique of "fixed positions", the rate matching pattern does not depend on the transport format, thereby making it possible to perform the de-rate matching operation inverse to rate matching without knowing the transport format. Thus, if one is not permitted to insert a small number of DTX symbols in step 118, the rate matching pattern ought then to produce a block size variation $\Delta N_{i,l}^{\text{obtained}}$ equal to the desired size variation $\Delta N_{i,l}^{\text{desired}}$ , for all the transport formats of transport channel *i* rather than for a single transport format *l*.

Given an algorithm for generating rate matching patterns, the pattern generated is wholly determined by an algorithm-specific group of parameters, these parameters are referred to hereinafter as pattern parameters. In the case of the algorithm of Table 1, the pattern parameters are only four in number and are $e_{ini}$, $e_{plus}$, $e_{minus}$, together with a parameter *s* considered implicitly by the algorithm and equal to:

- $s = -1$, when the rate matching is carried out by puncturing,
- $s = 0$, when neither puncturing nor repetition are performed (the block sizes before and after rate matching are equal), and
- $s = +1$, when the rate matching is carried out by repetition.

Given a single transport format *l*, it is always possible to find at least one set ($s$, $e_{ini}$, $e_{plus}$, $e_{minus}$) of pattern parameters such that the desired and obtained size variations are equal $\Delta N_{i,l}^{\text{desired}} = \Delta N_{i,l}^{\text{obtained}}$ for transport format *l*, and it is this which is done for the "conventional flexible positions". When the number of transport formats considered is larger, as in the invention, this may no longer be possible. Also, in the invention the set ($s$, $e_{ini}$, $e_{plus}$, $e_{minus}$) of pattern parameters is determined so that:

- on the one hand, for any transport format, the size variation obtained is at most equal to the desired size variation: $\forall l \ \Delta N_{i,l}^{\text{obtained}} \leq \Delta N_{i,l}^{\text{desired}}$ , and
- on the other hand, for any transport format *l*, the block after the rate matching step 116 being supplemented in the course of the step 118 of first insertion of DTX symbols with a number $\Delta N_{i,l}^{\text{desired}} - \Delta N_{i,l}^{\text{obtained}}$ of DTX symbols such that the total variation in size in the course of the succession of the steps 116 and 118 is equal to the desired size variation $\Delta N_{i,l}^{\text{desired}}$ , then we maximize a criterion which is a decreasing function of the number $\Delta N_{i,l}^{\text{desired}} - \Delta N_{i,l}^{\text{obtained}}$ of DTX symbols inserted for each transport format *l*. This criterion is hereinafter referred to as the "pattern fitting criterion". The advantages obtained are:
- that it is possible to reuse the known algorithm of Table 1, and
- that, after the succession of steps 116 and 118, the same block size $N_{i,l} + \Delta N_{i,l}^{\text{desired}}$ is obtained as in the conventional flexible positions, whilst retaining the following known advantages:

  - this block size is a multiple of the number $F_i$ of radio frames in the course of a TTI interval,
  - the size of the multiplexing frame obtained is always at most equal to the number $N_{data}$ of symbols offered by the physical channel(s), and
  - the number of DTX symbols inserted in the course of the step 126 of second insertion of DTX symbols is minimized when the bit rate of the composite channel is a maximum.

Alternatively, the same reasoning can be held to with a rate matching pattern generation algorithm other than that of Table 1, this other algorithm allowing better maximization of the pattern fitting criterion. An example of another algorithm will be given later.

As a general rule, $\vec{e}$ will denote the set of pattern parameters. Given a rate matching pattern generation algorithm, the size variation $\Delta N^{\text{obtained}}$ obtained in the course of the rate matching is dependent on the size $N$ before rate matching and on the set $\vec{e}$ of pattern parameters according to a function f:

$$\Delta N^{\text{obtained}} = f(N, \vec{e})$$

Moreover, *J* denotes the group of sets $\vec{e}$ of pattern parameters.

Thus, the first condition determines a group *E* of possible pattern parameter sets:

$$E = \left\{\vec{e} \in J \,/\, \forall l \; \mathrm{f}\!\left(N_{i,l}, \vec{e}\right) \le \Delta N_{i,l}^{\text{desired}}\right\}$$

Moreover, for any pattern parameter set $\vec{e}$, it is possible to calculate for any transport format $l$ the variation f $(N_{i,l}, \vec{e})$ obtained, and hence the number $\Delta N_{i,l}^{\text{desired}}$ -f$(N_{i,l}, \vec{e})$ of DTX symbols to be inserted, and hence to calculate the pattern fitting criterion, as a function of $\vec{e}$, which will be denoted C$(\vec{e})$.

Thus, in the invention, the determination of the pattern parameter set $\vec{e}$ comprises the following steps:

(a) determining the group $E$ of pattern parameter sets $\vec{e}$ complying with the constraint imposed by the desired size variations ($\forall l$ f$(N_{i,l}, \vec{e}) \le \Delta N_{i,l}^{\text{desired}}$) .
(b) determining that part of the group $E$ over which the pattern fitting criterion C$(\vec{e})$ is a maximum, and
(c) selecting an element of this part according to a predetermined selection criterion.

We shall, now, describe, in detail, how these three steps may be performed as a function of the block sizes $N_{i,l}$ before rate matching, and of the desired size variations $\Delta N_{i,l}^{\text{desired}}$ , in the case of the algorithm of Table 1, for a pattern fitting criterion, and for a selection criterion which is given solely by way of example.

In the example considered, we have $\vec{e}$ = (s, $e_{ini}$, $e_{minus}$, $e_{plus}$). Moreover, the group $J$ can be defined by the following conditions:

- $s \in$ {-1,0,+1}, and
- if $s$ = -1 then:

    - $e_{plus}$ positive non-zero integer,
    - $e_{minus}$ positive non-zero integer, $e_{minus} \in$ {1,2,...,$e_{plus}$-1},
    - $e_{ini}$ positive non-zero integer, $e_{ini} \in$ {1,2,...,$e_{minus}$}, and

- if $s$ = 0 then $e_{ini}$ = $e_{plus}$ = $e_{minus}$ = 1,
- if $s$ = 1 then:

    - $e_{plus}$ positive non-zero integer,
    - $e_{minus}$ positive non-zero integer, and
    - $e_{ini}$ positive non-zero integer, $e_{ini} \in$ {1,2,...,$e_{minus}$}.

It should be noted that:

- when $s$ = 0, the values of $e_{ini}$, $e_{plus}$ and $e_{minus}$ are not significant;
- when $s$ = -1 or $s$ = 1, the condition $e_{ini} \in$ {1,2,...,$e_{minus}$} is imposed so that the symbols of the block, the repetitions or puncturings are uniformly distributed over the block, and not concentrated at the start of the block; and
- when $s$ = -1, the condition $e_{minus} \in$ {1,2,...,$e_{plus}$ -1} is necessary in order for all the symbols of the block not to be punctured. This condition is not adopted for $s$ = 1, since it is possible for all the symbols of the block to be repeated at least once.

We shall, first of all, show that $N$ being the size of the block before rate matching, and $\Delta N^{\text{obtained}}$ the size variation obtained, the following relation can be deduced from the algorithm of Table 1:

$$\Delta N^{\text{obtained}} = \mathrm{f}\!\left(N, \bar{e}\right) = s \cdot \left(1 + \left\lfloor \frac{e_{minus} \cdot N - e_{ini}}{e_{plus}} \right\rfloor\right) \qquad (1)$$

where $\lfloor x \rfloor$ denotes the largest integer less than or equal to $x$.

Let us firstly assume that the instructions "**if** e $\le$ 0 **then**" and "**end if**" located respectively on lines 7 and 10 of the algorithm of Table 1 are replaced by instructions "**while** e $\le$ 0 **do**" and "**end while**". This is equivalent. Indeed, as in the case of puncturing, we have $e_{minus} < e_{plus}$, so in the body of the "**while** e $\le$ 0 **do**" loop the variable e becomes positive again, and hence the loop has at most one iteration.

If now I($m$) denotes the total number of iterations of the "**while** $e \leq 0$ do" loop on lines 7 to 10, for $m$ iterations of the "**while** $m \leq N$ **do**" loop on lines 5 to 12, then the value of the variable $e$ after the "**while** $e \leq 0$ **do**" loop is given below:

$$e = e_{ini} - m \cdot e_{minus} + I(m) \cdot e_{plus}$$

Indeed, $e$ is initially equal to $e_{ini}$, at each iteration of the "**while** $m \leq N$ **do**" loop $e_{minus}$ is deducted therefrom, and at each iteration of the "**while** $e \leq 0$ **do**" loop $e_{plus}$ is added thereto. Since the "**while** $e \leq 0$ **do**" loop is of the "while" type, I($m$) can be defined as the smallest integer such that $0 < e_{ini} - m \cdot e_{minus} + I(m) \cdot e_{plus}$, hence as the largest integer such that $0 \geq e_{ini} - m \cdot e_{minus} + (I(m)-1) \cdot e_{plus}$, hence by definition of $\lfloor x \rfloor$ we have:

$$I(m) - 1 = \left\lfloor \frac{m \cdot e_{minus} - e_{ini}}{e_{plus}} \right\rfloor$$

$$\text{i.e.} \quad I(m) = 1 + \left\lfloor \frac{m \cdot e_{minus} - e_{ini}}{e_{plus}} \right\rfloor . I$$

Since -I($N$) is in fact $\Delta N^{obtained}$, we deduce equation (1) in the case of puncturing (s = -1).

Similar reasoning in the case of repetition proves that equation (1) is always true.

We shall, now, describe in detail the algorithm for determining the pattern parameter set $\vec{e}_i = (s_i, e_{ini,i}, e_{minus,i}, e_{plus,i})$ used for transport channel $i$. The method proposed differs from the general case of the succession of steps (a), (b) and (c). Indeed, in the case of the patterns determined by the algorithm of Table 1, the problem can be divided into several simpler and independent problems.

Thus, firstly the value of $s_i$ is determined. Indeed, in view of the definition of $E$, it is clear that $\vec{e}_i = (s_i, e_{ini,i}, e_{minus,i}, e_{plus,i})$ being an element, then any element $\vec{e} = (s, e_{ini}, e_{minus}, e_{plus})$ such that $s < s_i$ is also an element of $E$. The number of DTX symbols inserted being a decreasing function of $s$, it is then possible to define $s_i$ once and for all, independently of $e_{ini,i}$, $e_{minus,i}$ and $e_{plus,i}$. This is done as follows:

```
s_i :=1;
for every l in TFS(i) do      -- TFS(i)    is     the
                              transport format set of
                              transport channel i
    s := sgn(ΔN_{i,l}^{desired})
    if s < s_i and N_{i,l} ≠ 0 then
        s_i := s
    end if
end for
```

where the function sgn($x$) is defined by:

$$sgn(x) = \begin{cases} -1 & \text{if } x < 0 \\ 0 & \text{if } x = 0 \\ 1 & \text{if } x > 0 \end{cases}$$

It should be noted that the above algorithm is equivalent to the following mathematical definition:

$$s_i = \min_{\substack{l \in TFS(i) \\ N_{i,l} \neq 0}} \left\{ \mathrm{sgn} \left( \Delta N_{i,l}^{\text{desired}} \right) \right\}$$

It should be noted, also, that the case $N_{i,l} = 0$ is not taken into account when minimizing $\mathrm{sgn}(\Delta N_{i,l}^{\text{desired}})$, since, in this case, both $N_{i,l} = 0$ and $\Delta N_{i,l}^{\text{desired}} = 0$, and hence it is not possible to say whether, in general, the rate matching is done by repetition, without change, or by puncturing.

When the parameter si determined $s_i$ equal to zero, then $e_{ini,i}$, $e_{minus,i}$ and $e_{plus,i}$ are fixed at 1, and transport channel $i$ is finished with. Otherwise, we proceed as hereinbelow:

Subsequently, $e_{plus,i}$ is fixed at the following value:

$$e_{plus,i} = 1 + 2 \cdot \max_{l \in TFS(i)} \left\{ N_{i,l} \right\} \qquad (2)$$

It should be noted that any greater or equal value may also be used. For example, a power of 2 greater than or equal to the value given by equation (2) could be used, with the advantage that the operations of division by $e_{plus,i}$ would thereby be simplified on a conventional microprocessor.

Indeed, let us recall formula (1):

$$\Delta N^{\text{obtained}} = s \cdot \left( 1 + \left\lfloor \frac{e_{minus} \cdot N - e_{ini}}{e_{plus}} \right\rfloor \right)$$

In view of this formula, it is apparent that if N, $s$, $e_{plus}$ and $e_{ini}$ are fixed and $e_{minus}$ varies, then $\Delta N^{\text{obtained}}$ varies with a stepsize of around $N/e_{plus}$. In order for $\Delta N^{\text{obtained}}$ to be able to be fixed at near 1, it is therefore necessary that $N/e_{plus} \leq 1$. In fact, since formula (1) comprises a rounding operation $x \mapsto \lfloor x \rfloor$ it is necessary that $N/e_{plus} < 1/2$. Hence $2 \cdot N + 1$ is the minimum value of $e_{plus}$ such that the size variation $\Delta N^{\text{obtained}}$ obtained can attain integer values separated by 1. Thus, by fixing $e_{plus,i}$ at the value given by formula (2), the number of solutions is not restricted. It should be noted that this choice of $e_{plus,i}$ from among several possible values, amounts to choosing one solution from among several others as in step (c).

Finally, lastly, it merely remains to define $e_{ini,i}$ and $e_{minus,i}$. This is done by the algorithm whose description will follow. This algorithm comprises the three phases (a), (b) and (c) of the general case, applied to the search for $(e_{ini,i}, e_{minus,i})$ alone.

In the first phase (a) we determine a group $E$ of pairs $(e_{ini}, e_{minus})$ such that $\Delta N_{i,l}^{\text{obtained}} \leq \Delta N_{i,l}^{\text{desired}}$ for any transport format $l$, in the next two phases (b) and (c) we search within the group $E$ determined for a particular pair $(e_{ini}, e_{minus}) = (e_{ini,i}, e_{minus,i})$ which maximizes a criterion C dependent on $(e_{ini}, e_{minus})$.

We shall now describe the first phase (a). $E_1$ denotes the group of pairs $(e_{ini}, e_{minus})$ such that $\Delta_{N_{i,l}}^{\text{obtained}} \leq \Delta N_{i,l}^{\text{desired}}$ for transport format $l$. $E$ is then the intersection of the groups

$$E_l: \quad E = \bigcap_{l \in TFS(i)} E_l \, .$$

The determination of $E$ can be decomposed as follows:

Table 2

```
01:    first_assignment := true
02:    -- TFS(i) transport format set
03:  for any l in TFS(i) such that N_{i,l} ≠ 0 do
04:    determines E_l
05:    if first_assignment then
06:        E := E_l


07:          first_assignment := false
08:    else
09:        E := E ∩ E_l
10:    end if
11:  end for
```

The algorithm of Table 2 consists in intersecting the groups $E_1$ incrementally. A flag *first_assignment* marks the first iteration. During the first iteration, $E_1$ is assigned to $E$ in line 6. During subsequent iterations, $E$ is updated so as now to retain only the elements which are also in $E_1$, this being done in line 9. It should be noted that in line 3, we consider only the transport formats such that $N_{i,l} \neq 0$. This does not affect the final value of $E$ since, for a transport format *l* such that $N_{i,l} = 0$, $E_l$ contains all the pairs ($e_{ini}$, $e_{minus}$) supported by the algorithm of Table 1 for the parameters $s_i$ and $e_{plus,i}$ already determined.

We shall, now, detail the operations of line 4 (determination of $E_l$) and of line 9 ($E := E \cap E_l$). Although the groups $E_l$ and $E$ are finite, it is more convenient to store them in the form of a graph, that is to say of an array of $e_{plus,i}$ elements giving a value of $e_{minus}$ for each value of $e_{ini}$. This is illustrated in Figure 11. In this figure, in the case of puncturing ($s_i = -1$), the group associated with a graph referenced 402 consists of the points lying inclusively between the graph 402 and the straight line with equation $e_{minus} = e_{plus,i}$ referenced 404. These points are represented by a hatched zone referenced 400. Similarly, in the case of repetition ($s_i = 1$), the group associated with a graph referenced 408 consists of the points lying inclusively between the graph 408 and the straight line with equation $e_{minus} = 1$ referenced 410. These points are represented by a hatched zone referenced 406. The use of a graph is made possible by the fact that the function $x \mapsto \lfloor x \rfloor$ is monotonic (with ascending order).

It should be noted that for the sake of simplifying Figures 4 and 5, and the algorithm, the condition $e_{ini} \in \{1,2,...e_{ini}\}$ has been substituted with the condition $e_{ini} \in \{1,2,...e_{plus}\}$ in the definition of *J*. This does not affect the solution found by the algorithm, since a criterion of phase (c) for selecting a solution from among those which maximize the fitting criterion, is to minimize the value of $e_{ini}$.

Hereinafter, the graph associated with $E_l$ is stored in an array *GL*, while that associated with $E$ is stored in an array *G*. The determination of $E_l$ is then done as follows:

Table 3

```
01:      A := s_i · ΔN_{i,1}^{desired} · e_{plus,i}

02:      Q := A div N_{i1}      --      euclidian division,
                                A div N_{i1} = ⌊A/N_{i1}⌋

03:      R := A mod N_{i1}      --      remainder of the euclidian
                                division, A mod N_{i1} = A - N_{i1} ·⌊A/N_{i1}⌋

04:  e_{minus} := Q
05:  e_{ini} := -R
06:  stop := false
07:  e'_{ini} := 1
08:  do
09:      e_{minus} := e_{minus} + 1
10:      e_{ini} := e_{ini}+ N_{i,1}
11:      if e_{ini} ≥ e_{plus,i} then
12:          stop := true
13:          e_{ini} := e_{plus,i}
14:      end if
15:

16:      while e'_{ini} ≤ e_{ini} do
17:          GL[e'_{ini}]:=e_{minus}
18:          e'_{ini} :=e'_{ini} + 1
19:      end while
20:  until stop
```

The algorithm of Table 1 is explained as follows: the graph $GL$ is in fact the locus for which the following equation in two unknowns $e_{ini}$ and $e_{minus}$ is true:

$$\mathrm{f}\left(N_{i,l,}\left(e_{ini},e_{minus},e_{plus,i},s_i\right)\right)= \Delta N_{i,l}^{\mathrm{desired}}$$

This graph has the form of a staircase of constant stepsize such that each stair of the staircase corresponds to an incrementation of $e_{minus}$ by 1 and to an incrementation of $e_{ini}$ by $N_{i,l}$. Thus, a point ($e_{ini}$, $e_{minus}$) is determined at the border of a stair in lines 4 and 5. A new stair is determined at each iteration of the loop going from line 8 to line 20 and a point of a stair undergoing determination is determined at each iteration of the loop going from line 16 to line 19.
The assigning of $E_1$ to $E$ in line 6 of the table2 consists simply in copying the graph $GL$ into the graph $G$ hereinbelow:

```
for e_ini:= 1 to e_plus,i do
       G[e_ini]:= GL[e_ini]
   end for
```

The intersecting of $E$ and of $E_1$ in line 9 of the table 2consists for each value of $e_{ini}$ in taking the largest value of $e_{minus}$ in the case of puncturing, and the smallest value of $e_{minus}$ in the case of repetition. This is detailed hereinbelow:

```
for e_ini:= 1 to e_plus,i do
    if s_i·G[e_ini] > = s_i·GL[e_ini] then
          G[e_ini] := GL[e_ini]
       end if
    end for
```

Once the graph $G$ has been determined, the group $E$ is available as illustrated in Figure 4. It would then be sufficient to calculate the fitting criterion $C$ on each point of the group $E$ and to retain one of the points maximizing the fitting criterion. It is possible to simplify this operation if it is noted that, regardless of the transport format, the number of DTX symbols is an increasing function of $e_{minus}$ in the case of puncturing, and a decreasing function of $e_{minus}$ in the case of repetition. This is a consequence of the fact that the function $x \mapsto \lfloor x \rfloor$ is monotonic. The fitting criterion being by definition a decreasing function of the number of DTX symbols inserted for each transport format. From this we deduce that the intersection of the group of points maximizing in $E$ the fitting criterion and of the graph $G$ is non-empty. It is therefore sufficient to conduct the search over $G$. This restriction pertains to phase (c). Phases (b) and (c) may therefore be written as follows:

```
                     Table 2
01:     best_criterion := -∝
02:     for e_ini := 1 to e_plus,i do
03:             e_minus := G[e_ini]
04:             new_criterion := C(e_ini, e_minus, e_plus,i, s_i)
05:         if new_criterion > best_criterion then
06:             best_e_minus := e_minus
07:             best_e_ini:= e_ini
08:             best_criterion := new_criterion
09:         end if
10:     end for
11:     e_ini,i := best_e_ini
12:     e_minus,i := best_e_minus
```

It should be noted, in Table 2 hereinabove, that on line 1, the variable *best_criterion* is assigned a value denoted $-\infty$ which is smaller than any value which the fitting criterion can take. This ensures that the test on line 5 is true at least once.

Moreover, it should be noted that the algorithm of Table 2 ensures that, from among all the points of the graph maximizing the fitting criterion, we choose that for which $e_{ini}$ is smallest, since on line 2, $e_{ini}$ runs through the group $\{1,2,...,e_{plus,i}\}$ in ascending order. This criterion of choice pertains to phase (c). As a general rule,

$$\max_{l \in TFS(i)} N_{i,l}$$

is of the order of at least a hundred, and hence $e_{plus,i}$ also. One can therefore question the complexity of the algorithm just described since it manipulates graphs of $e_{plus,i}$ and it comprises a loop of $e_{plus,i}$ in Table 2. In fact, it is possible to implement the algorithm with lesser complexity. This is because, as a general rule, the ratio

$$\max_{l \in TFS(i)} N_{i,l} \bigg/ \min_{\substack{l \in TFS(i) \\ N_{i,l} \neq 0}} N_{i,l}$$

is of the order of a few units, or even some ten units. Hence, the manipulated graphs are staircases comprising a number of stairs likewise of the order of a few units. There is therefore no need to store all the points of the graph, but only those for which the value of $e_{minus}$ changes. The same reasoning can be applied to the algorithm of Table 2. It is possible to determine for each stair of the graph the values of $e_{ini}$ for which the number of DTX bits varies for at least one transport format. It is then sufficient to calculate the criterion just for these determined values of $e_{ini}$.

Finally, it is possible to use a simpler sub-optimal algorithm, such as that of Table 3 hereinbelow. The simplification is illustrated in Figure 5. Instead of considering the whole group delimited by the graph (502, respectively 508), we consider only a rectangular part of this group, represented by a hatched zone in the figure (500, respectively 506). The simplification obtained is that one point (512, respectively 514) is sufficient to define the group. In Table 3, the part of $E_l$ which is considered is delimited by the point ($e_{ini}$, $e_{minus}$), while the part of $E$ which is considered is delimited by the point ($e_{ini,i}$, $e_{minus,i}$) . Thus, lines 7 and 8 are the counterparts of the determination of $E_l$, lines 10 and 11 are the counterparts of the assigning of $E_l$ to $E$, and lines 14 to 19 are the counterparts of the intersecting of $E$ and $E_1$.

Once all the intersections have been performed, the delimiting point of the rectangular part of $E$ considered constitutes the solution ($e_{ini,i}$, $e_{minus,i}$) to the problem.

In concrete examples, the degradation in terms of the number of DTX symbols, when using the algorithm of Table 3, seems negligible.

Table 3

```
01:  first_assignment := true;
02:  --   TFS(i) transport format set
03:  for all l in TFS(i) such that N_il ≠ 0 do
04:        A := s_i · ΔN_{i,1}^{desired} · e_{plus,i} ;
05:        Q := A div N_il        --   euclidian division,
                                  A div N_il = ⌊A/N_i1⌋
06:        R := A mod N_il        --   remainder of the
                                       euclidian division,
                                  A mod N_il = A - N_il ·⌊A/N_i1⌋
07:        e_minus := Q+1
08:        e_ini := N_{i.1}-R
09:        if first_assignment then
10:            e_{minus,i} := e_minus
11:            e_{ini,i} := e_ini
12:            first_assignment := false;
13:        otherwise
14:            if s_i · e_minus < s_i · e_{minus,i} then
15:                e_{minus,i} := e_minus
16:            end if


17:            if s_i · e_ini > s_i · e_{ini,i} then
18:                e_{ini,i} := e_ini
19:            end if
20:        end if
21:  end for
```

According to a variant embodiment, instead of inserting a number $\Delta N_{il}^{desired} - \Delta N_{il}^{obtained}$ of DTX symbols in step 118 of the invention, $\Delta N_{il}^{rounded} - \Delta N_{il}^{obtained}$ DTX symbols are inserted therein, where $\Delta N_{il}^{rounded}$ is any integer such that:

$$\begin{cases} \Delta N_{il}^{rounded} + N_{il} \text{ is a multiple of } F_i \\ \Delta N_{il}^{desired} \geq \Delta N_{il}^{rounded} \geq \Delta N_{il}^{obtained} \end{cases}$$

This amounts to shifting the insertion of $\Delta N_{il}^{desired} - \Delta N_{il}^{rounded}$ DTX symbols from the step 118 of first insertion of DTX symbols, to the step 126 of second insertion of DTX symbols.

According to the invention, it is also possible to use some other algorithm for determining rate matching pattern rather than that of Table 1, this other algorithm using a larger number of parameters makes it possible to directly approximate the values of the desired size variations $\Delta N_{il}^{desired}$. Stated otherwise, there is no longer any need to insert DTX symbols during the step 118 of first insertion nor, optionally, during the step 126 of second insertion. Hereinafter, this other algorithm is designated as the second algorithm, while the algorithm of Table 1 is designated as being the first algorithm.

The set of pattern parameters of the second algorithm is a list $\vec{e} = (\vec{\varepsilon}_1, \vec{\varepsilon}_2,..., \vec{\varepsilon}_p)$ of $p$ vectors $\vec{\varepsilon}_k = (N_k, s_k, e_{ini,k}, e_{plus,k}, e_{minus,k})$. Moreover, for each vector $\vec{\varepsilon}_k$, we have a parameter $N_k$, termed the segment size, satisfying the inequality $N_k > 0$. Given a block $B$ of symbols of non-zero size $N$ before rate matching, it is possible to find the largest integer $K$ in $\{0,1,...,p\text{-}1\}$ such that

$$\left(\sum_{m=1}^{m=K} N_m\right) < N$$

where by convention we put

$$\left(\sum_{m=1}^{m=0} N_m\right) = 0$$

The rate matching is then performed by segmenting the block $B$ of symbols of size $N$ into $K$+1 blocks $B_1$, $B_2$, ..., $B_{K+1}$ of respective sizes $N_1$, $N_2$, ..., $N_{K-1}$, $N_K$,

$$N - \left(\sum_{m=1}^{m=K} N_m\right)$$

such that the concatenation of the blocks $B_1$, $B_2$, ..., $B_{K+1}$ yields the initial block $B$. Each of the blocks $B_K$ is thereafter rate matched according to the first algorithm parametrized by the parameter set $(s_k, e_{ini,k}, e_{plus,k}, e_{minus,k})$ defined by $\vec{\varepsilon}_k$, so as to form blocks $B'_1$, $B'_2$, ..., $B'_{K+1}$. The blocks $B'_1$, $B'_2$, ..., $B'_{K+1}$ rate matched according to the first algorithm are thereafter concatenated so as to form the block $B'$ of symbols after rate matching according to the second algorithm.

Stated otherwise, the second rate matching algorithm determines rate matching patterns which are obtained by concatenating rate matching pattern spans obtained following the implementation of the first algorithm for each rate matching pattern span.

We now consider a transport channel $i$ having either a set $TFS(i) = \{1,...,L\}$ of transport formats such that $0 < N_{i,1} < N_{i,2} <...< N_{i,L-1}$, and for which we put $N_{i,0} = \Delta N_{i,0}^{desired} = 0$ by convention, or a set $TFS(i) = \{0,1,...,L\}$ of transport formats such that $0 = N_{i,0} < N_{i,1} < N_{i,2} <...< N_{i,L-1}$.

It is then sufficient, in order that, for any transport format $l$, we have $\Delta N_{i,l}^{obtained} = \Delta N_{i,l}^{desired}$, to parametrize the second rate matching algorithm as follows:

$p = L$
for all $k$ in $\{1,2,...,p\}$, $N_k = N_{i,k} - N_{i,k-1}$
for all $k$ in $\{1,2,...,p\}$, $e_{ini,k} = 1$
for all $k$ in $\{1,2,...,p\}$, $s_k = \text{sgn}(\Delta N_{i,k}^{desired} - \Delta N_{i,k-1}^{desired})$
for all $k$ in $\{1,2,...,p\}$:

$$\begin{cases} \begin{cases} e_{plus, k} = 1 \\ e_{minus, k} = 1 \end{cases} & \text{if } s_k = 0 \\ \begin{cases} e_{plus, k} = N_k \\ e_{minus, k} = \left| \Delta N_{i, k}^{desired} - \Delta N_{i, k-1}^{desired} \right| \end{cases} & \text{otherwise (that is to say} \\ & \text{if } s_k = 1 \text{ or } s_k = -1) \end{cases}$$

We shall now describe the way in which the receiver detects the transport formats. The fact that the transport channels are ordered by increasing duration of TTI interval within the composite channel is necessary for the construction of a receiver of low complexity. Indeed, blind transport format detection proceeds sequentially in the order of the transport channels within the composite channel.

This sequential detection is illustrated in Figure 6. In this figure, we consider a composite channel comprising three transport channels 1, 2 and 3, all three having a TTI interval of duration 10 ms corresponding to a radio frame. In the figure, the symbols of transport channel 1, of transport channel 2, of transport channel 3, are respectively represented by white, light grey and dark grey rectangles. These symbols are those supplied in step 124 of multiplexing the transport channels. The DTX symbols inserted in the step 126 of second insertion of DTX symbols are represented by hatched rectangles. The numbers of symbols are represented by the lengths of the rectangles.

Represented in the upper part of the figure are, for each transport channel, the numbers of symbols per transport channel and per transport format. Thus, transport channel 1 admits two transport formats 0 and 1 referenced 610 and 611 respectively. Transport channel 2 admits two transport formats 0 and 1 referenced 620 and 621 respectively. Transport channel 3 admits four transport formats 0 to 3 referenced 630, 631, 632 and 633 respectively.

In the subsequent description, $H_{i,l}$ will denote the number of symbols for transport channel $i$, for its transport format $l$, and before the step 124 of multiplexing the transport channels. Thus, in the present case, for example, the rectangle referenced 630 has a length representative of $H_{3,0}$, and the rectangle referenced 611 has a length representative of $H_{1,1}$.

Represented in the lower left part of the figure are all the combinations of transport formats of the composite channel considered. Each one is manifested by the corresponding multiplexing frame structure (with the DTX symbols inserted). Thus, the composite channel comprises 13 combinations of transport formats 0 to 12, corresponding to the respective references 640 to 652.

Represented in the lower right part is the way in which the various blind transport format detections are sequenced. It is assumed that the receiver has received a multiplexing frame with the combination of transport formats 1, that is to say such that the transport channels 1 to 3 have respective transport formats 0, 0 and 1.

The method uses a pointer associated with the multiplexing frame and making it possible to determine the position of the next transport channel whose transport format is to be detected. This pointer is represented in the figure by a triangle whose vertex points to the position pointed at by the pointer. Initially, the pointer points at the start of the frame received, as indicated at the reference 660. At this instant the receiver does not know which is the transport format combination of the frame received. This may be any combination from 0 to 12. Hence, the possible transport formats for transport channel 1 are 0 and 1. The receiver will therefore in step 662 and on the basis of the pointer demultiplex a number $H_{1,1}$ of symbols corresponding to the transport format 1 having the highest bit rate from among the possible transport formats (0 and 1). This demultiplexing corresponds to the operation inverse to the step 124 of multiplexing the transport channels, except for the fact that it is performed partially (for a single transport channel) and for a hypothetical transport format (transport format 1, whereas the format actually received is transport format 0). A block referenced 680 is thus obtained. The operation inverse to the rate matching step 116, and then the detection of transport format, which is carried out in the course of the channel decoding, are then performed on this block. It should be noted that the operations inverse to the steps 122 of segmentation per multiplexing frame, and 120 of first interleaving do not take place since these steps are non-existent for a duration of TTI interval of 10 ms. As regards the operation inverse to the step 118 of first insertion of DTX symbols, it is carried out at the same time as the channel decoding and the blind detection of transport format.

At the conclusion of the channel decoding of transport channel 1, the transport format of transport channel 1 has been detected to be 0. The possible combinations of transport format are therefore now only the combinations 0 to 6, since combinations 7 to 12 imply a transport format different from 0 for transport channel 1.

In step 664, the pointer is shifted by the quantity $H_{1,0}$ corresponding to the transport format 0 detected for transport channel 1.

For the combinations of transport formats 0 to 6 which are still possible, the transport channel 2 can take the transport formats 0 or 1. Among the possible transport formats for transport channel 2, transport format 1 corresponds to the highest bit rate. In step 666, a corresponding quantity $H_{2,1}$ is therefore demultiplexed so as to produce a block referenced 682. As before, transport format detection makes it possible to determine whether the transport format of transport channel 2 was in fact 0 and not 1 as in the demultiplexing of step 666. Thus, the pointer is advanced in step 668 by a quantity $H_{2,0}$.

At this juncture, the combinations of transport formats which are still possible are now only the combinations 0 to 3. Indeed, all the other combinations imply that transport channel 1 or 2 does not have the corresponding transport format detected. For the combinations of transport formats 0 to 3, transport channel 3 can take the transport formats 0 to 3. Therefore in step 670, a number of symbols $H_{3,3}$ corresponding to the possible transport format of highest bit rate is demultiplexed. In this way, a block referenced 684 is formed, on which as before, the blind transport format detection can be performed.

As has been understood from reading the foregoing explanations, the transport channels undergo transport format detection sequentially, in the order of multiplexing. Since transport format detection cannot be performed until a whole TTI interval has been received, it is therefore appropriate for the channels to be ordered within the composite channel in the order in which the TTI interval durations are increasing. Indeed, if for example transport channel 1 has a TTI interval of 20 ms and transport channel 2 a TTI interval of 10 ms, the transport format of transport channel 2 could only be detected every 20 ms, and not every 10 ms.

In a preferred embodiment, when several transport channels have the same TTI interval duration, then they are ordered according to the descending order of a criterion representative of the binary error rate and/or of the error rate per block which is (are) guaranteed by the corresponding service quality of the transport channel. Indeed, in the method which was presented, if a transport format detection error occurs for a transport channel $n$, then the detection of the transport format is no longer possible for the succeeding transport channels $n+1$, $n+2$, ..., $l$, where $l$ denotes the number of transport channels within the composite channel. Thus, it is appropriate to place the most robust transport channels first. It should be noted that this problem of transport format detection error propagation from one transport channel to the succeeding channels is not very serious insofar as the use of the invention is envisaged, for specific cases, with a restricted number of transport channels.

Typically, the invention is adapted for a composite channel conveying a telephony service with a single physical channel the spreading factor of which is 256. At present, the telephony service is envisaged with a spreading factor of 128. In order to be able to fit into a spreading factor of 256, that is to say with a halved resource in terms of codes, it is appropriate both:

- to use blind transport format detection, thus a saving is made with regard to the resource in terms of codes since no explicit indication of the combination of transport formats is dispatched, and
- to use the "flexible positions", thus a saving is made with regard to the resource in terms of codes, since it is possible to reuse the codes resource which is freed by the transport channel(s) carrying the voice for the transport channel carrying the signalling (this signalling comprises in particular that associated with the radio resources control protocol which must dispatch measurement results to the network, and must also manage the handovers) during the call. Indeed, on the one hand the codes resource occupied by the voice is less during periods of vocal inactivity (the talker is quiet), and on the other hand, it is also possible to reduce it by decreasing the bit rate of the voice source coding, at the cost of a minimum degradation in the sound quality.

The telephony service is simple since, on the one hand, it comprises a small number of transport channels and, on the other hand, these transport channels have low bit rate, and hence have channel encoding by convolutional code. Thus, the invention is relevant in this case.

The purpose of Figure 6 is to highlight the sequencing of the various detections of transport formats, and the use of a pointer. Also, for the sake of simplification, transport channels all having a TTI interval of 10 ms are considered. Illustrated in Figure 7 is what happens with longer TTI intervals. Transport channel 1 is considered for simplicity and so as to disregard the concept of a pointer. In this figure, we shall explain why it is vital for the first interleaver (step 120) to possess certain properties, and which these are.

Considered in Figure 7 is a transport channel 1 having a TTI interval of 20 ms, and having two transport formats 0 and 1 such that $H_{1,0} = 5$ and $H_{1,1} = 8$. At the top of the figure we consider a block referenced 720 of transport channel 1 for transport format 0. This block corresponds to data before the first interleaver, thus its size is $2 \cdot H_{1,0} = 10$. Step 700 corresponds to step 120 of first interleaving, it makes it possible to obtain the interleaved block 722. Step 702 corresponds to step 122 of segmentation per multiplexing frame. It makes it possible to obtain two segments 724 and 726, each associated with a respective multiplexing frame. Step 704 corresponds to steps 124 of multiplexing of the transport channels, and 126 of second insertion of DTX symbols. During this step 704, the data originating from the other transport channels, and the DTX symbols, jointly referenced 728 and 730, are multiplexed with the transport channel 1. Step 704 is performed twice, a first time so as to form the multiplexing frame with DTX symbols, referenced 732, and a second time so as to form the one referenced 734.

For the sake of simplification, it is assumed that the multiplexing frames 732 and 734 are received with no error. All the succeeding steps relate to reception. In step 706, for the transport channel 1, a quantity of data corresponding to the possible transport format of highest bit rate is demultiplexed. Stated otherwise, this involves transport format 1 with $H_{1,1} = 8$. In this way, segments referenced 736 and 738 are formed. Their size $H_{1,1}$ does not correspond to that $H_{1,0}$ of the sending segments 724 and 726, since the transport format of transport channel 1 is 0 and not 1. Step 706 corresponds to the operation inverse to step 124 of multiplexing the transport channels, except for the fact that a single transport channel is demultiplexed, and for a hypothetical transport format.

Step 708 corresponds to the operation inverse to step 122 of segmentation per multiplexing frame, except for the fact that it is performed for a hypothetical transport format, it makes it possible to obtain the block 740 corresponding to a TTI interval, rather than a radio frame.

The next step 710 corresponds to the operation inverse to step 120 of first interleaving, except for the fact that it is performed for a hypothetical transport format. It makes it possible to obtain a deinterleaved block 742.

It is noteworthy that the first $H_{1,0}$ symbols of block 742 correspond to the symbols sent. To be able to obtain, whilst being unaware of the transport format, a block whose prefix is the data sent, is what makes it possible to carry out blind transport format detection with low complexity as in the "fixed positions" technique. This is noteworthy since the interleaver used in step 700 and the deinterleaver used in step 710 are different solely on account of the fact that they have different depths, that is to say that they operate on blocks of different sizes. This is possible for all the interleavers defined by the succession of the following three steps:

- write the symbols row-wise into a matrix with *F* columns,
- permute the symbols within each row of the matrix with a row-specific permutation which does not depend on the total number of rows,
- read the symbols column-wise.

It is recalled that *F* is the duration of the TTI interval in terms of the number of radio frames. It should be noted that the first interleaver of the 3GPP system is a particular case of this, in the sense that the row-wise permutation is the same for all the rows.

We shall now describe Figure 8 which is a flowchart of an algorithm sequencing the blind rate detections according to the invention.

In the initial step 836, a frame number *n* is initialized to zero at the start of transmission. Moreover, a flag *ignore* is placed at **false**. This flag is used in a second error processing mode which will be described later.

In the next step 800, the receiver receives the multiplexing frame (with DTX symbols) number *n* hereinafter denoted $MF_n$. $MF_n$ is an array of $N_{data}$ elements each corresponding to a symbol received, the first is denoted $MF_n[0]$, the second $MF_n[1]$, etc. and the last $MF_n[N_{data} -1]$. Referring to Figure 1, $MF_n$ is obtained after the succession of the inverse operations of steps 132, 130 and 128.

Referring again to Figure 8, in the next step 802, a pointer $p_n$ is initialized so as to point at the first element of $MF_n$ as follows:

$p_n := 0$

Moreover, a transport channel index *i* is initialized so as to index the first transport channel within the composite channel:

$i := 1$

Indeed, it is assumed that the transport channels are indexed from 1 to *I*.

In the next step 804, a test is performed as to whether frame *n* is the last frame of the current TTI interval of transport channel *i*. $F_i$ being the number of frames in a TTI interval of transport channel *i*, it is sufficient to test whether $n+1$ is zero modulo $F_i$. This test is necessary since a whole TTI interval ought to have been received before being able to perform the succeeding steps. It is recalled that this is the reason why in the invention the transport channels are advantageously ordered within the composite channel according to an ascending order of the durations of their TTI intervals.

When the test is negative, we return to step 800 to receive the next frame, also the frame number is incremented in step 834 just before returning to step 800.

In the contrary case, a whole TTI interval has been received and we go to the next step 806. This step tests the flag *ignore* for the second error processing mode. In the general case, this flag is **false** and we go to the next step 808 where we determine a set *TFS* of possible transport formats for transport channel *i*. This determination has already been illustrated in Figure 6. The receiver already knows the transport formats of transport channels 1 to *i*-1 for the current frame number *n*. Thus, it is possible at the receiver to select from among all the combinations of transport formats of the composite channel, those which are in agreement with the information hereinabove enumerated with regard to the transport formats of transport channels 1 to *i*-1. The set *TFS* is then defined as the set of transport formats taken by transport channel *i* for the previously selected combinations of transport formats. It should be noted that this determined set is never empty.

In the next step 810, we determine for transport channel *i*, the value of a variable *H* indicating the bit rate before the step 124 of multiplexing the transport channels. This bit rate is determined as that corresponding to the possible transport format of highest bit rate. Thus, the bit rate before step 124 for transport channel *i* and its transport format *l* being denoted $H_{i,l}$, the value of *H* is assigned as follows:

$$ H := \max_{l \in TFS} H_{i,l} $$

In the next step 812, $F_i$ segments $B_0, B_1, ..., B_{F_i-1}$ are formed. The segment $B_k$ corresponds to the *H* symbols of the frame $MF_{n-F_i+1+k}$ starting from the position pointed at by the pointer $p_{n-F_i+1+k}$ associated with this frame. This step 812 corresponds to the operation inverse to the step 124 of multiplexing the transport channels, except that it is performed for a single transport channel, and for a hypothetical transport format (corresponding to the bit rate *H*). It should also be noted that step 812 corresponds to step 706 of Figure 7, and to steps 662, 666 and 670 of Figure 6.

In the next step 814, the $F_i$ segments $B_0$, $B_1$, ..., $B_{F_i-1}$ are concatenated to form a block of symbols $B$. This corresponds to the operation inverse to the step 708 of segmentation per multiplexing frame, except that it is performed for a hypothetical transport format. It should also be noted that this step 814 corresponds to step 708 of Figure 7.

In the next step 816, the block $B$ is deinterleaved. This corresponds to the operation inverse to step 120 of first interleaving, except that it is performed for a hypothetical transport format. It should also be noted that this step 816 corresponds to step 710 of Figure 7.

In the next step 818, the previously deinterleaved block $B$ undergoes de-rate matching. This corresponds to the operation inverse to step 116 of rate matching, except that it is performed for a hypothetical transport format.

In the next step 820, the channel decoding and the blind transport format detection are performed. It should be noted that the transport format to be detected is an element of *TFS*: thus, it may happen that the number of possible transport formats to be taken into consideration during blind transport format detection is smaller than the total number of transport formats, whence a simplification. For example, it may happen that *TFS* contains just a single element.

After step 820, when a transport format *I* has been determined during blind transport format detection with sufficient likelihood, the variable $H$ is updated in step 822 so as to reflect the detected bit rate of the transport channel, as follows:

$$H := H_{i,I}$$

When step 820 has allowed decoding with sufficient likelihood, then the next step is step 824 of updating the pointers. Otherwise, we go to step 830 for processing the errors.

In the next step 824 in the case of a detection of sufficient likelihood, the pointers $p_{n-F_i+1}$, $p_{n-F_i+2}$, ..., $p_n$ are reupdated, so as to point to the next transport channel, as follows:

```
for k := 0 to Fi-1 do
pn-k := pn-k + H
end for
```

It should be noted that this step 824 corresponds to steps 64 and 68 of Figure 6.

In the next step 826 we increment the transport channel index *i* before going to the next transport channel by returning to step 804, if there is a next channel, this being tested for meanwhile in step 828. If there is no next transport channel (*i* > *I*), we then return to step 800 to receive the next frame, after having meanwhile set (or reset) the flag *ignore* to **false**, and to increment the frame number in steps 832 and 834.

We shall now further explain the error processing performed in step 830.

In a first mode of processing the errors, step 822 of updating the variable H follows step 830 of processing the errors. It not having been possible to detect a transport format *I* with acceptable probability in the previous step 820, then a transport format *I* is predicted statistically, for example we predict that the transport format received is the same as that of the previous TTI interval. Thereafter, in the next step 822 the variable H is updated as a function of the predicted transport format *I*, and not as a function of that detected.

In a second error processing mode, step 830 is performed as follows:

A flag *ignore* which is initially **false** is placed at **true** and we go to step 826. After step 804, if the test is positive ((*n*+1)mod $F_I$ = 0) and if the last transport channel is considered (*i* = *I*), then the flag *ignore* is reset to **false** in step 832. When the flag *ignore* is at **true**, then all the steps, except 800, 802, 804, 806, 834, 826, 828, 832 and 834 are ignored, because after the test of step 806, we go directly to step 826.

We shall now describe a preferred variant embodiment of the multiplexing of the transport channels hereinafter referred to as two-way multiplexing. The embodiment which has been described, hereinafter referred to as one-way multiplexing, has in fact the following drawbacks:

- An error of detection of transport format on a transport channel *i* has an impact on the succeeding transport channels: *i*+1, *i*+2, ...,*I*
- The decoding of several transport channels cannot be performed in parallel. For example, while the channel decoder (operation inverse to step 108) is occupied with transport channel 1, it is not possible simultaneously to perform the operations inverse to first interleaving (step 120) or to rate matching (step 116) on transport channel 2.

In the preferred variant embodiment, termed two-way multiplexing, this is remedied by separating the transport channels {1, 2, ..., *I*} into two parts G={1, 2, ..., $I_G$} and D={$I_G$+1, $I_G$+2, ..., *I*}. The decoding of the two parts can be performed independently and in parallel. Thus, on the one hand, it is possible to construct a faster receiver, being able as it is to decode the first and the second part in parallel, and, on the other hand, this scheme is more robust to errors of detection of the transport format, since an error made in respect of one of the parts does not affect the other part.

Within each part G and D, the transport channels are ordered in ascending order of TTI interval duration, but there is no order relationship between elements originating from each of the parts. Stated otherwise, we have:

$F_1 \leq F_2 \leq ... \leq F_{IG}$ and $F_{IG+1} \leq F_{IG+2} \leq ... F_I$, but it is not necessary for $F_{IG} \leq F_{IG+1}$.

The steps 124 of multiplexing and 126 of second insertion of DTX symbols are replaced by a step 1000, illustrated in Figure 10, in the following way:

The blocks of symbols originating from the transport channels of the first part G referenced 1010 are concatenated in a step 1002 in a conventional manner and the product of the concatenation is placed at the start of the multiplexing frame in a concatenation step referenced 1008. The blocks of symbols originating from the transport channels of the second part D referenced 1012 are concatenated, in a conventional way, during a step 1004, then the order of the symbols is inverted in a step 1006 and the product of these two steps is placed at the end of the multiplexing frame in the concatenation step referenced 1008. It should be noted that the step 1006 of inversion of the order of the symbols is performed on the set of symbols of the transport channels of the part D, and not transport channel by transport channel. Thus, after step 1006, the transport channels are, in the symbol block traversed from the start to the end, in descending order of TTI interval duration, rather than in ascending order.

The DTX symbols are inserted in the concatenation step referenced 1008 between the data originating from the part G and those originating from the part D.

It should be noted, in Figure 10, that each box representative of a transport channel, for example that referenced 1014, corresponds to a encoding chain such as the chains 102A, 102B, ... in Figure 1.

Two-way multiplexing is compared with one-way multiplexing in an example in Figure 9. Figure 9 is similar to Figure 6 as far as the one-way multiplexing is concerned, and also the same references have been retained for similar elements. The figure describes a composite channel comprising three transport channels, namely 1, 2 and 3. The part G consists of the transport channels 1 and 2, while the part D consists of the transport channel 3.

In the upper part of Figure 9, the transport formats of the three transport channels are represented as already described in respect of Figure 6, the same colour convention is used (channel 1 = white, channel 2 = light grey, channel 3 = dark grey).

In the lower left part, the multiplexing frames with DTX symbols, obtained when one-way multiplexing is employed, are represented for the thirteen combinations of transport formats 0 to 12 of the composite channel by the frames referenced 640 to 652 respectively.

In the lower right part, the multiplexing frames with DTX symbols, obtained when two-way multiplexing is employed, are represented for the thirteen combinations of transport formats 0 to 12 of the composite channel by the frames referenced 940 to 952 respectively.

It should be noted that the blocks referenced 930 to 932 within the frames 940 to 952 differ from the respective blocks referenced 630 to 632 within the frames 640 to 652 in that the order of their symbols is inverse.

We shall now describe the impact on Figure 8 of two-way multiplexing. In fact, two similar algorithms represented by the modified Figure 8 are respectively executed independently, the first is executed for the part G, and the second for the part D.

For the part G, Figure 8 is modified only in step 828, where the comparison $i \leq I$ is replaced by the comparison $i \leq I_G$, namely only transport channels 1 to $I_G$ are processed.

For the part D, Figure 8 is modified in two points. In step 802, $i := 1$ is replaced by $i := I_G+1$, namely only transport channels $I_G+1$ to $I$ are processed. Moreover, step 812 is modified as follows:

$$\text{for } k := 0 \text{ to } F_i\text{-}1 \text{ do}$$
$$B_{F_i-1-k} := MF_{n-k}\left[(N_{data}-1)-(p_{n-k})\right], \quad MF_{n-k}\left[(N_{data}-1)-(p_{n-k}+1)\right], ...,$$
$$..., \quad MF_{n-k}\left[(N_{data}-1)-(p_{n-k}+H\text{-}1)\right]$$
$$\text{end for}$$

Stated otherwise, the segment $B_k$ corresponds to the $H$ symbols of the frame $MF_{n-F_i+1+k}$ starting from the position $(N_{data}-1)-(p_{n-F_i+1+k})$ and backtracking through the positions to the start of the frame.

It should be noted that, for the part D, the position pointed at by a pointer $p$ is $(N_{data}-1)-(p)$. Thus, if the pointer $p$ is zero ($p = 0$), then we point to the position $N_{data}-1$ of the last symbol of the frame, and as the pointer $p$ increases, the position pointed at backtracks to the start of the frame. This differs from the part G for which the value of the pointer is directly that of the position.

It should be noted that for the parts G and D, the same names of variables ($i$, TFS, B, ignore, $p_n$, etc...) in fact identify independent variables respective to each part and in general not taking the same values.

Only the variables $MF_n$ or $n$ respective to the two parts G and D take the same values for both parts.

Let us denote by $I_D = I - I_G$ the number of elements of the part D. It should be noted that one-way multiplexing can be seen as a particular case of two-way multiplexing for which D is empty ($I_D = 0$).

It is possible for the transport formats of certain transport channels to depend on those of other transport channels. In particular, it is possible for the transport format of a transport channel $i$, to be wholly determined by the transport formats of the previous transport channels 1, 2, ..., $i$-1 ($I_G + 1$, $I_G + 2$, ... $i$-1 respectively). In this instance, the set *TFS* determined in step 808 for this transport channel is always a singleton.

Thus, let us assume that the knowledge of the transport formats of the first $U_G$ (respectively $U_D$) transport channels of G (respectively D) is sufficient to deduce the transport formats of the next $I_G$-$U_G$ (respectively $I_D$-$U_D$) transport channels. It is recalled that

- the first $U_G$ transport channels of G are transport channels 1 to $U_G$,
- the first $U_D$ transport channels of D are transport channels $I_G$+1 to $I_G$+$U_D$
- the last $I_G$-$U_G$ transport channels of G are transport channels $U_G$+1 to $I_G$
- the last $I_D$-$U_D$ transport channels of D are transport channels $I_G$+$U_D$+1 to $I$

In this case, the order of the TTI interval durations within G (respectively D) may not be complied with among the last $I_G$-$U_G$ (respectively $I_D$-$U_D$) transport channels. Stated otherwise:

$$F_1 \leq F_2 \leq ... \leq F_{U_G} \text{ and } \forall i \in \{U_G + 1,...,I_G\}\ F_i \geq F_{U_G}$$

or respectively:

$F_{I_G+1} \leq F_{I_G+2} \leq ... \leq F_{I_G+U_D}$ and $\forall i \in (I_G + U_D + 1,...,I\}\ F_i \geq F_{I_G+U_D}$, whereas in $\{U_G + 1,...,I_G\}$ (respectively in $\{I_G + U_D + 1,...,I\}$) $F_i$ does not necessarily increase.

When it does not increase, the flowchart of Figure 8 is no longer adapted other than for the reception of the first $U_G$ (respectively $U_D$) transport channels, whereas for the succeeding $I_G$-$U_G$ (respectively $I_D$-$U_D$) channels the operations inverse to multiplexing (124) and to segmentation per multiplexing frame (122) are performed as in the "conventional flexible positions", that is to say by knowing the respective transport formats.

Restricting the algorithm to the first $U_G$ (respectively $U_D$) transport channels amounts to modifying step 828 so that the comparison performed is i $\leq U_G$ (respectively i $\leq I_G + U_D$) .


**Claims**

1. Method for multiplexing at least two transport channels in flexible positions, said transport channels being included within a composite channel, each of said transport channels emanating from and being processed by a specific processing procedure, each of said transport channels having a bit rate which can vary, a transport format representing, for one and the same transport channel, said bit rate, each of said processing procedures comprising a step of rate matching, said rate matching step varying the size of a block of symbols to be rate matched, to a size of the rate matched block of symbols according to a size variation determined as a function of a rate matching pattern, said rate matching pattern being defined by a rate matching pattern parameter set, said method comprising, for each transport channel, a step of determining a desired size variation between said block of symbols to be rate matched and the block of symbols produced at the output of the associated processing procedure,
   characterized in that said method comprises, for each of said processing procedures, a step of determining said rate matching pattern parameter set, said rate matching pattern parameters being determined independently of the single transport format considered and making it possible to obtain at most said desired size variation for each of said transport formats.

2. Multiplexing method according to Claim 1, characterized in that said determined rate matching pattern parameters make it possible to obtain a size variation, termed the size variation obtained, between said block of symbols to be rate matched and said rate matched block of symbols, and in that said method comprises, during each of said processing procedures, a step of inserting symbols of zero-energy contribution, said rate matching step preceding said step of inserting symbols of zero-energy contribution, so that the sum of said size variation obtained and of the number of symbols of zero-energy contribution inserted is at most equal to said desired size variation.

3. Multiplexing method according to Claim 2, characterized in that said rate matching pattern parameters are determined as a function of a set (s, $e_{ini}$, $e_{plus}$, $e_{minus}$) of four rate matching pattern parameters, termed the first parameter set, determining said rate matching pattern according to a first algorithm in which:

- the value of the first parameter s determines whether, during said rate matching step, at least some symbols of the block of symbols to be rate matched are to be punctured or to be repeated, or all the symbols of the block of symbols to be rate matched are to be preserved in their state;

and, if, during said rate matching step, at least some symbols of the block of symbols to be rate matched are to be punctured or to be repeated according to said value of the first parameter then:

- the value of the second parameter $e_{ini}$ is the initial value assigned to a decision criterion e relating to said rate matching step to be implemented;
- the value of the third parameter $e_{plus}$ is the value, for each punctured or repeated symbol, of an increment added to said decision criterion e relating to said rate matching step to be implemented; and
- the value of the fourth parameter $e_{minus}$ is the value, for each new symbol considered of the block of symbols to be rate matched, of a decrement deducted from said decision criterion e;

each of the symbols of the block of symbols to be rate matched being considered in accordance with its order of arrangement within said block, said rate matching step puncturing or repeating the symbol considered if the value of said decision criterion e is below a predetermined threshold.

**4.** Multiplexing method according to Claim 1, characterized in that said rate matching step, termed the global rate matching step, is performed according to a second algorithm and comprises:

- a step of segmenting said block of symbols to be rate matched, the number of segments of symbols to be rate matched produced being a maximum, the sizes of said segments of symbols to be rate matched produced being determined by a second set of parameters of the rate matching pattern, said second rate matching pattern parameter set comprising a list of parameters $\vec{\varepsilon}_k$, each of said parameters $\vec{\varepsilon}_k$ itself comprising a third set of five parameters ($N_k$, $s_k$, $e_{ini,k}$, $e_{plus,k}$, $e_{minus,k}$) associated with the segment of symbols to be rate matched $k$ considered, the value of the first parameter $N_k$ of said third set representing the size of the segment of symbols to be rate matched $k$ considered, with the exception of the last segment of symbols to be rate matched,
- a partial step of rate matching of each of said segments of symbols to be rate matched, said partial step of rate matching being performed according to said first algorithm of Claim 3 and as a function of said first parameter set of Claim 3 with, for parameter values, those of the last four parameters ($s_k$, $e_{ini,k}$, $e_{plus,k}$, $e_{minus,k}$) of said third parameter set corresponding to the segment of symbols to be rate matched $k$ considered,
- a step of concatenating the segments of rate matched symbols obtained after said partial steps of rate matching so as to form said rate matched block of symbols.

**5.** Multiplexing method according to Claim 4, characterized in that said global rate matching step comprises, for a transport channel $i$ considered:

- a step of ranking, in ascending order, the non-zero sizes of blocks of symbols to be rate matched, for each of the transport formats, and
- a step of determining, for the same transport channel $i$, each of the parameters of said second parameter set according to the following formulae:
- $p = L$, $p$ being the number of parameters in said second parameter set, and $L$ being the number of non-zero sizes of blocks of symbols to be rate matched for all the transport formats; and
- for every $k$ lying between 1 and $p$:

  - $N_k = N_{i,k} - N_{i,k-1}$, $N_k$ being said first parameter of said third parameter set, and $N_{i,k}$ being the k-th non-zero size of block of symbols to be rate matched, $N_{i,k-1}$ being the (k-1)-th non-zero size of block of symbols to be rate matched for k > 1, and taking the value zero for k = 1;
  - $s_k = \text{sgn}(\Delta N_{i,k}^{desired} - \Delta N_{i,k-1}^{desired})$,

    - $s_k$ being the second parameter of said third parameter set;
    - $\Delta N_{i,k}^{desired}$ being the desired size variation for the transport format corresponding to the k-th non-zero size of block of symbols to be rate matched considered;
    - $\Delta N_{i,k-1}^{desired}$ being the desired size variation for the transport format corresponding to the (k-1)-th non-zero size of block of symbols to be rate matched when k > 1, and taking the value zero when k = 1;
    - $x \mapsto \text{sgn}(x)$ being a function the image value of which determines for the first parameter of said first set of Claim 3, that at least one symbol is to be punctured when $x < 0$, that the symbols are to remain in their state when $x = 0$, and that at least one symbol is to be repeated when $x > 0$;

-   $e_{ini,k} = 1$; $e_{ini,k}$ being the second parameter of said third parameter set; and
-   when the value $s_k$ assigned to said second parameter of said third parameter set determines for the first parameter of said first parameter set of Claim 3 that at least one symbol is to be punctured or repeated:

  -   $e_{plus,k} = N_k$; $e_{plus,k}$ being the third parameter of said third parameter set, and $N_k$ being the value assigned to said first parameter of said third parameter set,
  -   $e_{minus,k} = |\Delta N_{i,k}^{desired} - \Delta N_{i,k-1}^{desired}|$,

  -   $e_{minus,k}$ being the fifth parameter of said third parameter set,
  -   $\Delta N_{i,k}^{desired}$ and $\Delta N_{i,k-1}^{desired}$ designating the same values as for the assigning of said second parameter $s_k$ of said third parameter set, and
  -   $x \mapsto |x|$ being the absolute value function.

6.   Multiplexing method according to any of Claims 1 to 5, each of said transport channels being transmitted over at least one associated transmission time interval, said method for multiplexing transport channels comprising a step of multiplexing transport channels, characterized in that said step of multiplexing transport channels itself comprises the following successive steps of:

   d) distributing the transport channels into at least two parts of transport channels;
   e) multiplexing by concatenation, in each of the parts, the transport channels, so as to obtain, for each part, a partial multiplexing frame, the transport channels being concatenated, in at least one of said parts, according to the ascending order of the durations of their transmission time intervals; and
   f) concatenating said partial multiplexing frames.

7.   Multiplexing method according to Claim 6, characterized in that said step of distributing the transport channels into at least two parts of transport channels comprises a phase of distributing the transport channels into at least one part of a first type and at least one part of a second type which are such that the distributed transport channels in a part of the second type have a transport format which can be deduced from the transport formats of distributed transport channels in at least one part of the first type, and in that the transport channels in the part or parts of the first type are concatenated according to the ascending order of the durations of their transmission time intervals.

8.   Multiplexing method according to Claim 6 or 7, said method comprising a step of inserting symbols of zero-energy contribution, said step of inserting symbols of zero-energy contribution following said step of multiplexing transport channels, termed the second insertion step, said step of inserting symbols of zero-energy contribution included within said processing procedure being termed the first insertion step,
   characterized in that said first insertion step makes it possible to insert symbols of zero-energy contribution, a first part of the difference between said desired size variation and said size variation obtained, and said second insertion step makes it possible to insert a second part of the difference between said desired size variation and said size variation obtained, said second part being complementary to said first part.

9.   Multiplexing method according to any of Claims 2 to 8, characterized in that said step of determining said rate matching pattern parameter set comprises the following successive steps of:

   a) determining a group of sets of parameters of rate matching patterns satisfying an initial condition according to which the size variation obtained in the course of said rate matching step is below said desired size variation;
   b) determining, in said group of sets of parameters of rate matching patterns, a subgroup consisting of the rate matching pattern parameter sets ensuring the maximization of a first predetermined criterion; and
   c) selecting, in said subgroup, a rate matching pattern parameter set according to a second predetermined criterion.

10.   Multiplexing method according to any of Claims 2, 3 and 6 to 9, characterized in that, for each processing procedure, said size variation $\Delta N^{obtained}$ obtained in the course of said rate matching step for a block of symbols having a size $N$ before said rate matching step is given by the following formula:

$$\Delta N^{\text{obtained}} = s \cdot \left( 1 + \left\lfloor \frac{e_{minus} \cdot N - e_{ini}}{e_{plus}} \right\rfloor \right) \tag{3}$$

where $\lfloor x \rfloor$ denotes the largest integer less than or equal to $x$; and

where s, $e_{ini}$, $e_{minus}$ and $e_{plus}$ are parameters of said first rate matching pattern parameter set.

**11.** Multiplexing method according to Claim 10, characterized in that, for each processing procedure, the first parameter s of the rate matching pattern parameter set of said rate matching step of each processing procedure is given by the following formula:

$$s = \min_{l \in TFS} \left\{ \text{sgn} \left( \Delta N_l^{\text{desired}} \right) \right\}$$

where *TFS* is the transport format set and $\Delta N_l^{\text{desired}}$ is the desired size variation for the transport format *l* considered.

**12.** Multiplexing method according to Claim 10 or 11, characterized in that, for each processing procedure, the third parameter, $e_{plus}$, of the rate matching pattern parameter set of said rate matching step of each processing procedure satisfies the following inequality:

$$e_{plus} \geq 1 + 2 \cdot \max_{l \in TFS} \left\{ N_l \right\}$$

where *TFS* is the set of the transport formats and $N_l$ is the size of the block of symbols before said rate matching step for the transport format *l* considered.

**13.** Multiplexing method according to any of the preceding claims, characterized in that each processing procedure comprises a step of interleaving at the conclusion of said step of inserting symbols of zero-energy contribution, which interleaving step comprises the following successive phases of:

d) writing the symbols row-wise into a matrix;
e) permuting the symbols within each row of the matrix with a row-specific permutation, and the permutation being independent of the total number of rows of the matrix; and
f) column-wise reading of the symbols of the matrix.

**14.** Multiplexing method according to any of the preceding claims and comprising a step of multiplexing transport channels, characterized in that said step of multiplexing transport channels comprises the following successive phases of:

d) distributing the transport channels into a first part of transport channels and into a second part of transport channels;
e) concatenating the transport channels of the first part so as to produce a first partial multiplexing frame;
f) processing the transport channels of the second part, so as to produce a second partial multiplexing frame, the processing phase comprising the following steps of:

c 1) concatenating the transport channels; and
c 2) inverting the order of the symbols in each of the concatenated transport channels or in each of the transport channels to be concatenated; and

d) concatenating the first and second partial multiplexing frames.

**15.** Application to a composite channel conveying at least one telephony service of a multiplexing method according to any of the preceding claims, the telephony service having in particular a spreading factor the value of which is equal to 256.

16. Device for multiplexing at least two transport channels in flexible positions, said transport channels being included within a composite channel, each of said transport channels emanating from and being processed by a specific processing module, each of said transport channels having a bit rate which can vary, a transport format representing, for one and the same transport channel, said bit rate, each of said processing modules comprising means of rate matching, said rate matching means varying the size of a block of symbols feeding said rate matching means, to a size of the symbol block generated by said rate matching means according to a size variation determined as a function of a rate matching pattern, said rate matching pattern being defined by a rate matching pattern parameter set, said device comprising, for each transport channel, means of determining a desired size variation between said block of symbols to be rate matched and the symbol block produced at the output of the associated processing module,

characterized in that said device comprises, for each of said processing modules, means of determining said rate matching pattern parameter set, said rate matching pattern parameters being determined independently of the single transport format considered and making it possible to obtain at most said desired size variation, for each of said transport formats.

101

102A

104 — attaching of FCS

100

106 — concatenation/segmentation into blocks to be encoded

108 — channel encoding

102B

116 — rate matching

118 — 1st insertion of DTX symbols

120 — 1st interleaving

122 — segmentation per multiplexing frame

124 — multiplexing of the TrCHs

126 — 2nd insertion of DTX symbols

128 — segmentation into physical channels

130 — 2nd interleaving

132 — mapping to physical channel

PhCH#1    PhCH#2    • • •

# FIG.1

FIG.2A

FIG.2B

FIG.3

FIG.4

FIG.5

FIG.6

700 720 | s0 | s1 | s2 | s3 | s4 | s5 | s6 | s7 | s8 | s9 |

702 722 | s0 | s2 | s4 | s6 | s8 | s1 | s3 | s5 | s7 | s9 |

724 | s0 | s2 | s4 | s6 | s8 | 728

726 | s1 | s3 | s5 | s7 | s9 | 730

704 732 +

734 +

706 | s0 | s2 | s4 | s6 | s8 |

| s1 | s3 | s5 | s7 | s9 |

708 736 | s0 | s2 | s4 | s6 | s8 | + | s1 | s3 | s5 | s7 | s9 | 738

710 740 | s0 | s2 | s4 | s6 | s8 | s1 | s3 | s5 | s7 | s9 |

742 | s0 | s1 | s2 | s3 | s4 | s5 | s6 | s7 | s8 | s9 |

FIG.7

EP 1 104 126 A1

n:=0
IGNORE:=FALSE

836

RECEIVE
FRAME $MF_n$

800

$p_n := 0$
$i := 1$

802

n:=n+1

834

804

$(n+1) \bmod F_i = 0$ —— no

yes

806

true —— IGNORE

false

808

DETERMINE THE SET TFS OF POSSIBLE TRANSPORT
FORMATS FOR TRANSPORT CHANNEL i

810

$$H := \max_{l \in TFS} H_{i,l}$$

812

for k :=0 to $F_i - 1$ do
$B_{F_i - 1 - k} := MF_{n-k}[p_{n-k}], MF_{n-k}[p_{n-k}+1], ..., MF_{n-k}[p_{n-k}+H-1]$
end for

814

$B := CONCAT (B_0, B_1, ..., B_{F_i - 1})$

816

DEINTERLEAVE B

818

DE-RATE MATCHING OF B

DECODING OF B WITH BLIND
TRANSPORT FORMAT DETECTION

ERROR

830

820

822

$H := H_{i,l}$ l HAVING BEEN DETECTED

FIG.8

824

for k:=0 to $F_i - 1$ do
$p_{n-k} := p_{n-k} + H$
end for

826 —— i:=i+1

IGNORE:=FALSE

832

828

i<I —— yes —— no

610
611

620
621

630
631
632
633

640 — 610 620 630
641 — 610 620 631
642 — 610 620 632
643 — 610 620 633
644 — 610 621 630
645 — 610 621 631
646 — 610 621 632
647 — 611 620 630
648 — 611 620 631
649 — 611 620 632
650 — 611 621 630
651 — 611 621 631
652 — 611 621 632

940 — 610 620 930
941 — 610 620 931
942 — 610 620 932
943 — 610 620 933
944 — 610 621 930
945 — 610 621 931
946 — 610 621 932
947 — 611 620 930
948 — 611 620 931
949 — 611 620 932
950 — 611 621 930
951 — 611 621 931
952 — 611 621 932

FIG.9

1014  1010  1012

TrCH 1 • • • TrCH $I_G$-1 TrCH $I_G$

TrCH $I_G$+1 TrCH $I_G$+2 • • • TrCH $I$

1000

CONCATENATION   CONCATENATION   1004

1002

INVERSION OF THE ORDER OF THE SYMBOLS   1006

1008   DTX

CONCATENATION

FIG.10

## DOCUMENTS CONSIDERED TO BE RELEVANT

**European Patent Office**

**EUROPEAN SEARCH REPORT**

**Application Number**

EP 00 40 3103

| Category | Citation of document with indication, where appropriate, of relevant passages | Relevant to claim | CLASSIFICATION OF THE APPLICATION (Int.Cl.7) |
|---|---|---|---|
| A | WO 97 40593 A (ERICSSON TELEFON AB L M) 30 October 1997 (1997-10-30) * abstract * * page 15, line 14 – page 17, line 6 * * figure 4 * | 1-16 | H04B7/26 |
| A | WO 99 03224 A (ERICSSON TELEFON AB L M) 21 January 1999 (1999-01-21) * abstract; claim 1 * | 1-16 | |

**TECHNICAL FIELDS SEARCHED (Int.Cl.7)**

H04B

The present search report has been drawn up for all claims

| Place of search | Date of completion of the search | Examiner |
|---|---|---|
| THE HAGUE | 9 March 2001 | Lazaridis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 00 40 3103

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2001

| Patent document cited in search report | Publication date | Patent family member(s) | | Publication date |
|---|---|---|---|---|
| WO 9740593 A | 30-10-1997 | US | 5883899 A | 16-03-1999 |
| | | AU | 723962 B | 07-09-2000 |
| | | AU | 2718497 A | 12-11-1997 |
| | | BR | 9708733 A | 03-08-1999 |
| | | CA | 2252419 A | 30-10-1997 |
| | | EP | 0895676 A | 10-02-1999 |
| | | JP | 2000509574 T | 25-07-2000 |
| WO 9903224 A | 21-01-1999 | US | 6108369 A | 22-08-2000 |
| | | AU | 8364098 A | 08-02-1999 |
| | | BR | 9810998 A | 08-08-2000 |
| | | CN | 1269933 T | 11-10-2000 |
| | | EP | 0995284 A | 26-04-2000 |
| | | TW | 387177 B | 11-04-2000 |
| | | ZA | 9805930 A | 27-01-1999 |

EPO FORM P0459

For more details about this annex : see Official Journal of the European Patent Office, No. 12/82